# EUROPEAN PATENT SPECIFICATION

(11) **EP 3 498 027 B1**
(45) Date of publication and mention of the grant of the patent: **24.05.2023**
(21) Application number: 16912868.3
(22) Date of filing: 28.12.2016
(51) Int. Cl.: H04W 74/08

(54) **DENIAL TO SEND FRAME FOR MULTIPLE CHANNEL ACCESS**
DENIAL-TO-SEND-RAHMEN FÜR MEHRKANALZUGRIFF
TRAME DE REFUS D'ENVOI POUR ACCÈS PAR CANAUX MULTIPLES

(30) Priority: 11.08.2016 US 201662373477 P
(43) Date of publication of application: 19.06.2019
(73) Proprietor: Intel Corporation, Santa Clara, CA 95054 (US)
(72) Inventor: TRAININ, Solomon, 31015 Haifa (IL); CORDEIRO, Carlos, Camas, WA 98607 (US)
(74) Representative: HGF
(86) International application number: PCT/US2016/068854
(87) International publication number: WO 2018/031056

(56) References cited:
- KR-A- 20120 024 849
- KR-A- 20130 038 385
- KR-A- 20130 122 000
- US-A1- 2010 054 213
- US-A1- 2010 329 178
- US-A1- 2013 286 959
- US-A1- 2015 282 186
- US-A1- 2015 282 186
- SHIWEN HE(SEU): "Proposed Resolution to CID 2 on TGaj D0.6 in CC22 ; 11-15-1245-00-00aj-proposed-resolution-to- cid-2-on-tgaj-d0-6-in-cc22", IEEE DRAFT; 11-15-1245-00-00AJ-PROPOSED-RESOLUTION-TO- CID-2-ON-TGAJ-D0-6-IN-CC22, IEEE-SA MENTOR, PISCATAWAY, NJ USA, vol. 802.11aj, 13 October 2015 (2015-10-13), pages 1-20, XP068099153, [retrieved on 2015-10-13]

## Description

### CROSS REFERENCE TO RELATED APPLICATIONS

This application claims priority, to U.S. Provisional Patent Application No. 62/373,477, filed August 11, 2016, entitled "APPARATUS, SYSTEM AND METHOD OF COMMUNICATING A DENIAL TO SEND (DTS) FOR MULTIPLE-CHANNEL ACCESS".

### TECHNICAL FIELD

An exemplary aspect is directed toward communications systems. More specifically an exemplary aspect is directed toward wireless communications systems and even more specifically to IEEE (Institute of Electrical and Electronics Engineers) 802.11 wireless communications systems. Even more specifically, exemplary aspects are at least directed toward one or more of IEEE (Institute of Electrical and Electronics Engineers) 802.11ad/ay/... communications systems and in general any wireless communications system or protocol, such as 4G, 4G LTE, 5G and later, and the like. Embodiments described herein may also generally relate to communicating Denial to Send (DTS) for multiple-channel access.

### BACKGROUND

Wireless networks transmit and receive information utilizing varying techniques and protocols. For example, but not by way of limitation, two common and widely adopted techniques used for communication are those that adhere to the Institute for Electronic and Electrical Engineers (IEEE) 802.11 standards such as the IEEE 802.11ad standard, the IEEE 802.11ay standard, etc.

The IEEE 802.11 standards specify a common Medium Access Control (MAC) Layer which provides a variety of functions that support the operation of IEEE 802.11-based Wireless LANs (WLANs) and devices. The MAC Layer manages and maintains communications between IEEE 802.11 stations (such as between radio network interface cards (NIC) in a PC or other wireless device(s) or stations (STA) and access points (APs)) by coordinating access to a shared radio channel and utilizing protocols that enhance communications over a wireless medium.

The IEEE 802.11 standards define a Denial to Send (DTS) frame, which is usually transmitted in response to a Ready to Send (RTS) frame. The DTS frame can be transmitted by a directional multi gigabit (DMG) station (STA) to indicate that the Clear Channel Assessment (CCA) at the STA is busy. Specifically, the DTS frame delivers the network allocation vector (NAV) and addresses of the STAs that are occupying the channel. Given that the DTS is transmitted in a directional fashion, the DTS frame transmission does not necessarily negatively impact the communication between the STAs that are occupying the channel.

Document US 2010/0329178 relates to a new response to a Request-to-Send (RTS) message that has been created to avoid a hidden-node problem that is particular to directional networks.

### SUMMARY

Embodiments of the invention are set out in the appended claims.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
Fig. 1A illustrates an embodiment of an environment for conducting block acknowledgements for multi-band transmissions;
Fig. 1B is a schematic block diagram illustration of a system;
Fig. 2 is a schematic illustration of a communication including a Request to Send (RTS)/Clear to Send (CTS) exchange;
Fig. 3 illustrates an embodiment of a signalling procedure for providing a DTS frame;
Fig. 4 illustrates an embodiment of a DTS frame;
Fig. 5 is a flowchart outlining an exemplary technique for providing a DTS frame;
Fig. 6 is a flowchart outlining an exemplary technique for providing a DTS frame;
Fig. 7 is a schematic illustration of a product of manufacture; and
Fig. 8 is an illustration of the hardware/software associated with a STA and/or AP.

### DESCRIPTION OF EMBODIMENTS

For multi-channel procedures, the current DTS frame definition is not sufficient because the DTS frame only applies to single channel operation. Therefore, extending the DTS frame definition to multiple channels is desired. Further, bandwidth (BW) information may be usable in DTS frames. However, the use of the BW information is not defined for the DTS frame.

A wireless communication network in a millimeter-wave band may provide high-speed data access for users of wireless communication devices. According to some Specifications and/or Protocols, devices may be configured to perform all transmissions and receptions over a single channel bandwidth (BW). Some Specifications may be configured to support a Single User (SU) system, in which a STA cannot transmit frames to more than a single STA at a time.

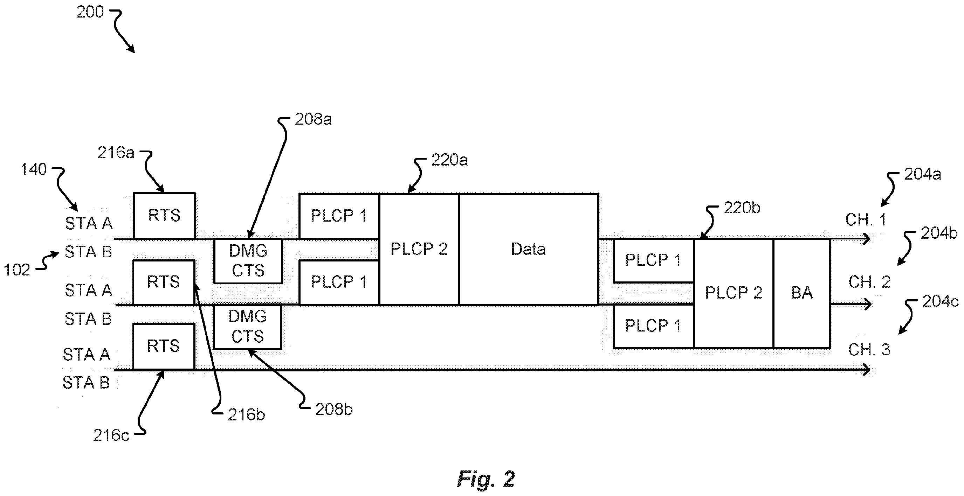

Some of the embodiments presented herein provide for sending DTS frames to inform neighboring STAs about an ongoing transaction in a channel. In general, link access for data transfer in a DMG network requires RTS/CTS exchange to identify the beamformed link to be used for the following data transaction. In case of multi-channel access, RTS/CTS frames are exchanged in each channel that is used later to deliver wideband data frames (see Fig. 2). Parallel transmission of the same RTS and CTS frame is called duplicated mode transmission. The purpose of duplicated transmission of RTS/CTS frames is to inform neighboring STAs in each channel about the ongoing transaction and to allow the receiving STAs to assert NAV.

The role of the DTS frame is to inform the intended transmitter and other stations about the remaining duration of the NAV kept locally at the intended transaction recipient. This information is important to synchronize STAs about deferred accesses. This information is particularly important in DMG networks because channel access is directional and STAs may not be aware of the NAV. Therefore, a STA that receives a DTS frame can use this information to defer channel access until when the NAV, at the intended destination STA, becomes zero. Thus, an objective herein is to provide the same functionality supported by DTS frames for single channel, but now for multiple channels access.

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Some embodiments may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing Wireless-Gigabit-Alliance (WGA) specifications (Wireless Gigabit Alliance, Inc. WiGig MAC and PHY Specification Version 1.1, April 2011, Final specification) and/or future versions and/or derivatives thereof, devices and/or networks operating in accordance with existing IEEE 802.11 standards (IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012; IEEE802.11ac-2013 ("IEEE P802.1 1ac-2013, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 4: Enhancements for Very High Throughput for Operation in Bands below 6GHz", December, 2013); IEEE 802.11ad ("IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band", 28 December, 2012); IEEE-802.11REVmc ("IEEE 802.11-REVmcTM/D3.0, June 2014 draft standard for Information technology - Telecommunications and information exchange between systems Local and metropolitan area networks Specific requirements; Part 11: Wireless LAN Medium Access Control (MAC) and Physical Layer (PHY) Specification"); IEEE802.11-ay (P802.11ay Standard for Information Technology--Telecommunications and Information Exchange Between Systems Local and Metropolitan Area Networks--Specific Requirements Part 11: Wireless LAN Medium Access Control (MAC) and Physical Layer (PHY) Specifications--Amendment: Enhanced Throughput for Operation in License-Exempt Bands Above 45 GHz)) and/or future versions and/or derivatives thereof, devices and/or networks operating in accordance with existing Wireless Fidelity (WiFi) Alliance (WFA) Peer-to-Peer (P2P) specifications (WiFi P2P technical specification, version 1.5, August 2014) and/or future versions and/or derivatives thereof, devices and/or networks operating in accordance with existing cellular specifications and/or protocols, e.g., 3rd Generation Partnership Project (3GPP), 3GPP Long Term Evolution (LTE) and/or future versions and/or derivatives thereof, units and/or devices which are part of the above networks, and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth , Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE advanced, Enhanced Data rates for GSM Evolution (EDGE), or the like. Other embodiments may be used in various other devices, systems and/or networks.

Some demonstrative embodiments may be used in conjunction with a WLAN, *e.g*., a WiFi network. Other embodiments may be used in conjunction with any other suitable wireless communication network, for example, a wireless area network, a "piconet", a WPAN, a WVAN and the like.

Some demonstrative embodiments may be used in conjunction with a wireless communication network communicating over a frequency band of 60GHz. However, other embodiments may be implemented utilizing any other suitable wireless communication frequency bands, for example, an Extremely High Frequency (EHF) band (the millimeter wave (mmWave) frequency band), e.g., a frequency band within the frequency band of between 20Ghz and 300GHZ, a WLAN frequency band, a WPAN frequency band, a frequency band according to the WGA specification, and the like.

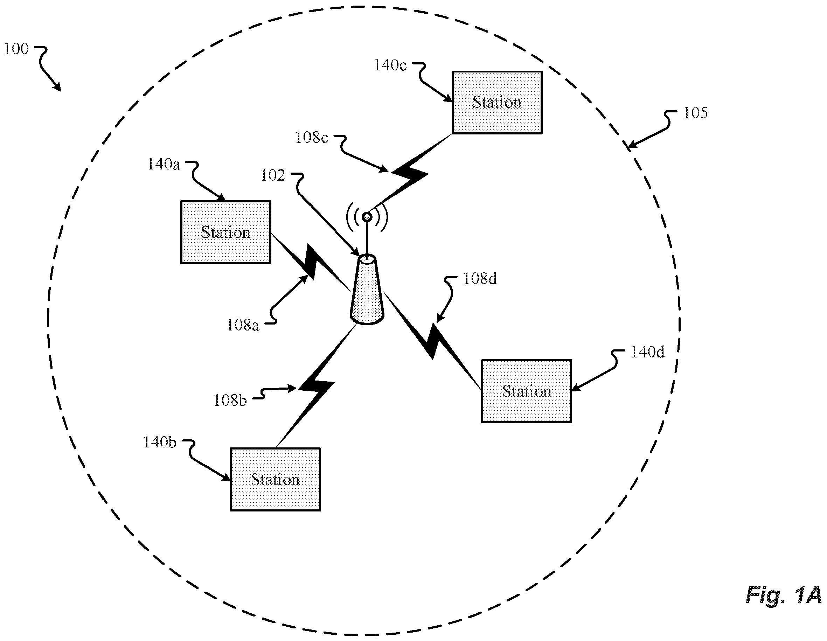

Fig. 1A illustrates an example of an operating environment 100 which may be representative of various configurations described herein. The WLAN 105 may comprise a basic service set (BSS) that may include a master station 102 and one or more other stations (STAs) 140. The master station 102 may be an access point (AP) using the IEEE 802.11 specification(s) to transmit and receive. In some configurations, the AP can be a second STA (e.g., STA B 102). The AP 102 may be a base station and may use other communications protocols as well as the IEEE 802.11 protocol. The IEEE 802.11 protocol may be the IEEE 802.11ad/ay or later standard. The IEEE 802.11 protocol may include using orthogonal frequency division multiple-access (OFDMA), time division multiple access (TDMA), and/or code division multiple access (CDMA).

The STAs 140 may include one or more DMG STAs 140 a, 140b, 140d (as illustrated in, *e.g.,* the IEEE 802.11ay standard) and/or one or more legacy (as illustrated in, *e.g.,* the IEEE 802.11n/ac standards) STAs 140c. The legacy STAs 140c may operate in accordance with one or more of IEEE 802.11 a/b/g/n/ac/ad/af/ah/aj, or another legacy wireless communication standard. The STAs 140a, 140b, 140d may be wireless transmit and receive devices, for example, a cellular telephone, a smart telephone, a handheld wireless device, wireless glasses, a wireless watch, a wireless personal device, a tablet, an Internet of Things (IoT) device, or another device that may be transmitting and/or receiving using a IEEE 802.11 protocol, for example, the IEEE 802.11ay or another wireless protocol. In the operating environment 100, an AP 102 may generally manage access to the wireless medium in the WLAN 105.

Within the environment 100, one or more STAs 140a, 140b, 140c, 140d may associate and/or communicate with the AP 102 to join the WLAN 105. Joining the WLAN 105 may enable STAs 140a-140d to wirelessly communicate with each other via the AP 102, with each other directly, with the AP 102, or to another network or resource through the AP 102. In some configurations, to send data to a recipient (e.g., STA 140a), a sending STA (e.g., STA 140b) may transmit an uplink (UL) physical layer convergence procedure (PLCP) protocol data unit (PPDU) comprising the data to AP 102, which may then send the data to the recipient STA 140a, in a downlink (DL) PPDU.

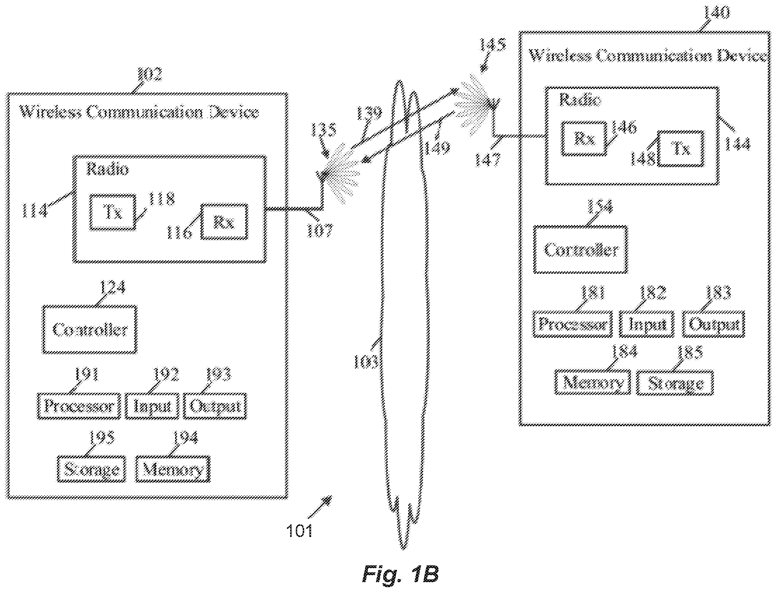

Reference is now made to Fig. 1B, which schematically illustrates a system 101. As shown in Fig. 1B, system 101 may include one or more wireless communication devices, e.g., APs 102 and/or STAs 140. For example, system 101 may include a first wireless communication device 102, a second wireless communication device 140, and/or one more other devices.

Devices 102 and/or 140 may include a mobile device or a non-mobile, e.g., a static, device. For example, devices 102 and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, a handheld device, an Internet of Things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like. In general, the devices 102 and 140 could be any device that could benefit from one or more of the technologies presented herein.

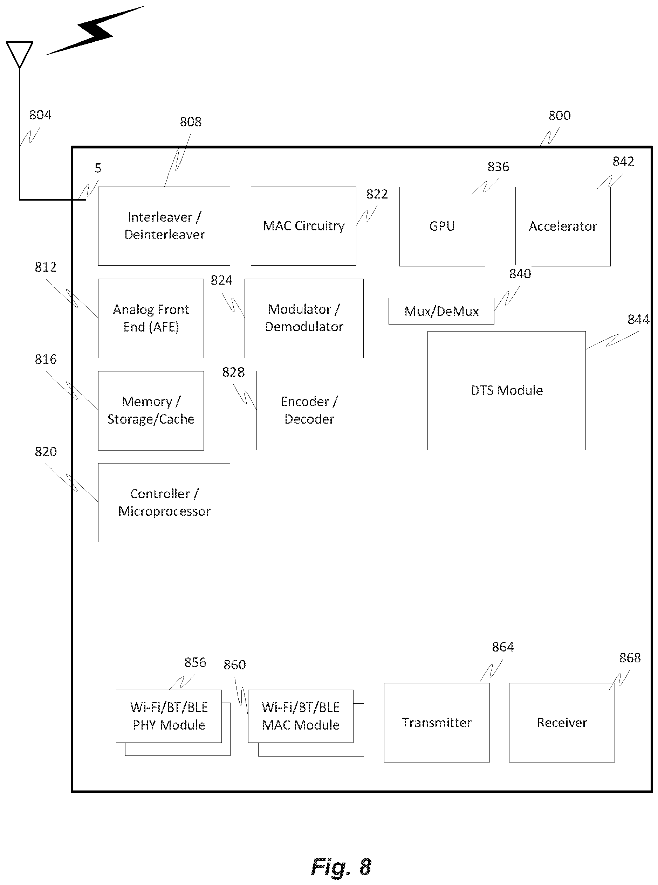

The device 102 may include one or more optional components including, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components, such as those described in conjunction with Fig. 8. Some or all of the components of one or more of devices 102 and/or 140 may be enclosed in a common housing or packaging, and may be interconnected or operably associated using one or more wired or wireless links. In other embodiments, components of one or more of devices 102 and/or 140 may be distributed among multiple or separate devices.

Processor 191 and/or processor 181 can include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 executes instructions, for example, of an Operating System (OS) of device 102 and/or of one or more suitable applications. Processor 181 executes instructions, for example, of an Operating System (OS) of device 140 and/or of one or more suitable applications.

Input unit 192 and/or input unit 182 includes, for example, a keyboard, a keypad, a mouse, a touch-screen, a touch-pad, a track-ball, a stylus, a microphone, or other suitable pointing device or input device. Output unit 193 and/or output unit 183 includes, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

Memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 includes, for example, a hard disk drive, a floppy disk drive, a Compact Disk (CD) drive, a CD-ROM drive, a DVD drive, or other suitable removable or non-removable storage units. Memory unit 194 and/or storage unit 195, for example, may store data processed by device 102. Memory unit 184 and/or storage unit 185, for example, may store data processed by device 140.

Wireless communication devices 102 and/or 140 may be capable of communicating content, data, information, control information, and/or signals via a wireless medium (WM) 103. Wireless medium 103 may include, for example, a radio channel, a cellular channel, an RF channel, a WiFi channel, an IR channel, a Bluetooth^{®} (BT) channel, a Bluetooth^{®} Low Energy Channel, a Global Navigation Satellite System (GNSS) Channel, an RFID or Near-Field Communications (NFC) channel, and the like. WM 103 may include one or more directional bands and/or channels. For example, WM 103 may include one or more millimeter-wave (mmWave) wireless communication bands and/or channels. Also, WM 103 may include one or more DMG channels. WM 103 may also include any other channels, *e.g*., directional channels.

In some demonstrative embodiments, devices 102 and 140 may include one or more radios including circuitry and/or logic to perform wireless communication between devices 102, 140 and/or one or more other wireless communication devices. For example, device 102 may include a radio 114, and/or device 140 may include a radio 144. Radios 114 and/or 144 may include one or more wireless receivers (Rx) including circuitry and/or logic to receive wireless communication signals, RF signals, frames, blocks, transmission streams, packets, messages, control information, information, data items, and/or data. For example, radio 114 may include a receiver 116, and/or radio 144 may include a receiver 146. Radios 114 and/or 144 may include one or more wireless transmitters (Tx) including circuitry and/or logic to send wireless communication signals, RF signals, frames, blocks, transmission streams, packets, messages, control information, information, data items, and/or data. For example, radio 114 may include a transmitter 118, and/or radio 144 may include a transmitter 148. Radios 114 and/or 144 may include circuitry, logic, modulation elements, demodulation elements, encoders, decoders, amplifiers, analog to digital and digital to analog converters, filters, error correctors, and/or the like. For example, radios 114 and/or 144 may include or may be implemented as part of a wireless Network Interface Card (NIC), and the like.

Radios 114 and/or 144 may include, or may be associated with, one or more antennas 107 and/or 147, respectively. In one example, device 102 may include a single antenna 107. In another example, device 102 may include two or more antennas 107. In one example, device 140 may include a single antenna 147. In another example, device 140 may include two or more antennas 147. Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. Antennas 107 and/or 147 may include, for example, antennas suitable for directional communication, *e.g*., using beamforming techniques. For example, antennas 107 and/or 147 may include a phased array antenna, a multiple element antenna, a set of switched beam antennas, and/or the like. In some embodiments, antennas 107 and/or 147 may implement transmit and receive functionalities using separate transmit and receive antenna elements. In some embodiments, antennas 107 and/or 147 may implement transmit and receive functionalities using common and/or integrated transmit/receive elements.

In some demonstrative embodiments, antennas 107 and/or 147 may include a directional antenna, which may be steered to a plurality of beam directions. For example, antenna 107 may be steered to a plurality of beam directions 135, and/or antenna 147 may be steered to a plurality of beam directions 145. For example, device 102 may transmit a directional transmission 139 to device 140, and/or device 140 may transmit a directional transmission 149 to device 102.

Device 102 may include a controller 124, and/or device 140 may include a controller 154. Controllers 124 and/or 154 may be configured to perform one or more communications, operations and/or procedures, *e.g*., as described below. Controllers 124 and/or 154 may include circuitry and/or logic, *e.g*., processor circuitry and/or logic, memory circuitry and/or logic, Media-Access Control (MAC) circuitry and/or logic, Physical Layer (PHY) circuitry and/or logic, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, *e.g*., as described below.

In some demonstrative embodiments, devices 102 and/or 140 may be configured to operate in accordance with one or more Specifications, for example, including, one or more *IEEE 802.11 Specifications, e.g.,* an *IEEE 802.11ad Specification,* an *IEEE 802.11ay Specification,* and/or any other specification and/or protocol. For example, an amendment to a DMG operation in the 60 GHz band, *e.g.,* according to *an IEEE 802.11ad Standard,* may be defined, for example, by an IEEE 802.11ay project.

Some communications over a wireless communication band, for example, a DMG band may be performed over a single channel bandwidth (BW). For example, the *IEEE 802.11ad Specification* defines a 60 GHz system with a single channel bandwidth (BW) of 2.16 GHz, which is to be used by all Stations (STAs) for both transmission and reception.

Devices 102 and/or 140 may be configured to implement one or more mechanisms, which may, for example, enable to extend a single-channel BW scheme, *e.g.*, according to the *IEEE 802.11ad Specification,* for higher data rates and/or increased capabilities. Devices 102 and/or 140 may be configured to implement one or more channel bonding mechanisms, which may for example, support communication over bonded channels. Devices 102 and/or 140 may be configured to implement one or more channel bonding mechanisms, which may for example, support an increased channel bandwidth, for example, channel BWs of 4.32 GHz, 6.48 GHz, and/or any other channel BW.

Some specifications, *e.g.,* an *IEEE 802.11ad Specification,* may be configured to support a Single User (SU) system, in which a Station (STA) cannot transmit frames to more than a single STA at a time. Such Specifications may not be able, for example, to support a STA transmitting to multiple STAs simultaneously, for example, using a multi-user MIMO (MU-MIMO) scheme, *e.g.,* a downlink (DL) MU-MIMO, or any other MU scheme.

Devices 102 and/or 140 may be configured to implement one or more Multi-User (MU) mechanisms. For example, devices 102 and/or 140 may be configured to implement one or more MU mechanisms, which may be configured to enable MU communication of Downlink (DL) frames using a Multiple-Input-Multiple-Output (MIMO) (*i.e.,* MU-MIMO) scheme, for example, between a device, *e.g.,* device 102, and a plurality of devices, *e.g.,* including device 140 and/or one or more other devices.

Devices 102 and/or 140 may be configured to communicate over a Next Generation 60 GHz (NG60) network, an Extended DMG (EDMG) network, and/or any other network. For example, devices 102 and/or 140 may be configured to communicate MIMO, *e.g.,* DL MU-MIMO, transmissions and/or use channel bonding, for example, for communicating over the NG60 and/or EDMG networks.

Devices 102 and/or 140 may be configured to support one or more mechanisms and/or features, for example, channel bonding, single user (SU) MIMO, and/or and multi user MU-MIMO, for example, in accordance with an EDMG Standard, an *IEEE 802.11ay standard* and/or any other standard and/or protocol.

Devices 102 and/or 140 may be configured to implement a Denial to Send (DTS) mechanism configured for multi-channel access, *e.g.,* as described below. A Denial to Send (DTS) frame may be transmitted, for example, in response to a Request to Send (RTS) frame reception. For example, a DMG STA may receive an RTS frame, and may transmit a DTS frame, for example, to indicate that a Clear Channel Assessment (CCA) of a channel at the STA is busy.

In some demonstrative embodiments, the DTS frame may be configured to deliver an indication that a network allocation vector (NAV) is set or a duration value to indicate a length of time for which the NAV will be set, and addresses of STAs that are occupying the channel. The DTS frame transmission may not necessarily negatively impact communication between the STAs that are occupying the channel, for example, since the DTS is transmitted in a directional fashion. Devices 102 and/or 140 may be configured to support multi-channel usage, for example, to allow communication over multiple-channels, for example, in the form of one or more wide channels (also referred to as "bonded channels"), *e.g*., in accordance with a future IEEE 802.11ay Specification.

A DTS frame definition, which may be configured for communication over a single channel, may not be sufficient, as such a DTS frame may only cover a single channel operation. A DTS frame definition may be extended to support multi-channels, for example, to support communication according to a future IEEE 802.11ay Specification.

Bandwidth (BW) information may be delivered in RTS and/or CTS frames. DTS frames may be configured to support using a BW indication. A DTS configuration may be defined to support use of the BW information, for example, in a manner which may be suitable for the specific purpose and/or attributes of the DTS frame, *e.g*., as described below.

Devices 102 and/or 140 may be configured to generate, set, access, use, and/or process one or more fields of a DTS frame, to communicate, signal, indicate and/or determine information to support multi-channel access, *e.g*., as described below.

In some demonstrative embodiments, one or more fields of the DTS frame, for example, the Duration and/or Address fields of the DTS frame, may be used, for example, in conjunction with BW information, for example, to inform about which channels have a virtual or physical CCA busy state, *e.g*., as described below. The DTS frame may be configured in a way, which may enable at least to provide a technical solution for denial to send signaling for multiple channel access, *e.g*., as described below.

Link access for data transfer in a DMG network may be based on, *e.g.,* may require, an RTS/CTS exchange, for example, to identify a beamformed link to be used for a following data transaction. For example, in the case of multi-channel access, RTS/CTS frames are exchanged in each channel that is to potentially be later used to deliver wideband data frames over a wide channel.

Fig. 2 is a schematic illustration of a communication including an RTS/CTS exchange. For example, as shown in Fig. 2, a first STA ("STA A"), *e.g*., device 140, may transmit an RTS frame 216a-216c over a plurality of channels, *e.g*., three channels 204a-204c, as shown in Fig. 2. For example, the plurality of channels 204a-204c may be part of a wide channel. For example, as shown in Fig. 2, a second STA ("STA B"), *e.g*., device 102, may receive the RTS frame 216, and may transmit a CTS frame 208a, 208b over a plurality of channels 204a, 204b, *e.g*., over two channels as shown in Fig. 2.

Parallel transmission of the same RTS frame 216, *e.g*., as shown in Fig. 2, and/or parallel transmission of the same CTS frame 208, *e.g*., as shown in Fig. 2, may be performed, for example, according to a duplicated mode transmission mechanism. The duplicated transmission of the RTS/CTS frames may allow, for example, to inform a neighboring STA (*e.g*., 140b) in each channel about the ongoing transaction, and/or to allow the receiving STAs to assert a NAV.

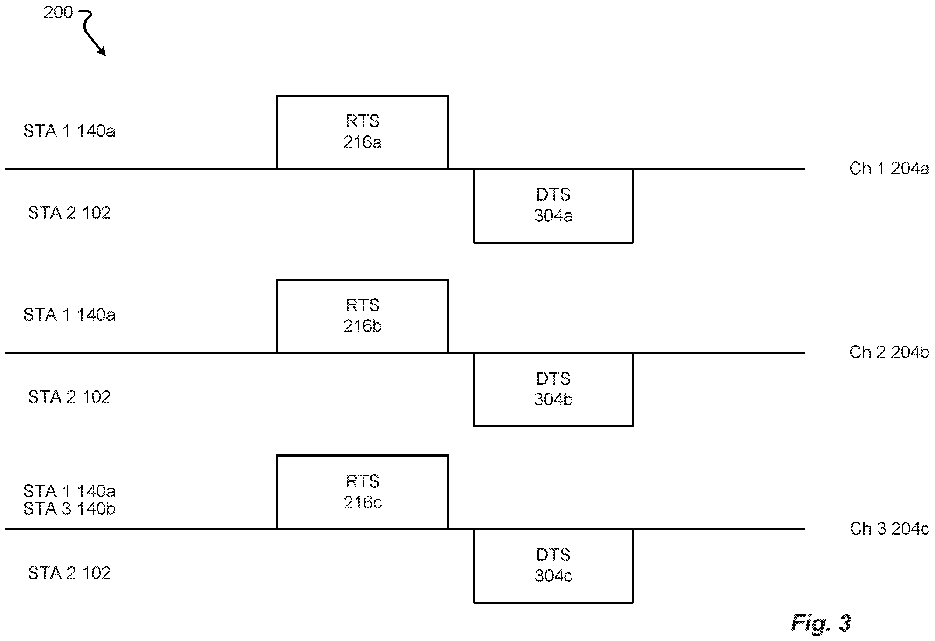

A STA receiving an RTS frame 216 addressed to the STA ("the intended recipient" or "intended destination"), *e.g*., the STA B 102, may use a DTS frame (see Fig. 3), for example, to inform the sender of the RTS 216 ("the intended transmitter"), *e.g*., STA A 140, and/or one or more other stations/devices, about the remaining duration of the NAV kept locally at the intended transaction recipient 102. This information may be important, for example, at least to synchronize STAs about deferred accesses. This information may be particularly important, for example, in DMG networks, since channel access is directional and many STAs may not be aware of the NAV. Therefore, a STA that receives a DTS frame can use this information to defer channel access, for example, until when the NAV at the intended destination STA becomes zero.

Devices 102 and/or 140 may be configured to generate, communicate and/or process a DTS frame, which may be configured to support a functionality of a DTS frame with respect to multiple channels access, *e.g*., to support communication according to a future IEEE 802.11ay Specification.

A first STA, *e.g*., device 140, may be configured to transmit to a second STA ("the responder station"), *e.g*., device 102, an RTS frame 216 over a plurality of channels 204a-204c, *e.g*., as shown in Fig. 2. For example, the plurality of channels 204a-204c may be part of a wide channel, *e.g*., identified by a wide channel identifier, denoted *k,* and having a primary channel identified by a primary channel identifier, denoted *n.* The second STA, *e.g.,* device 102, may be configured to check a CCA state of the wide channel, *e.g*., at reception of the RTS frames 216. The second STA, *e.g*., device 102, may be configured to transmit a DTS frame, for example, based on the observed CCA state, *e.g*., as described below. The second STA, *e.g*., device 102, may be configured to include, in the DTS frame, one of more of, but is not limited to: 1) a Duration field, which may be configured to indicate a NAV set at the second STA and/or include a duration value to indicate a length of time for which the NAV will be set, if any; 2) an address field to indicate addresses of STAs, *e.g.*, a Receive Address (RA) of a first station and/or a Transmit address (TA) of a second STA, occupying one or more of the plurality of channels; and/or 3) a BW indication field to indicate one or more, if any, channels of the plurality of channels which are observed to be busy. The second STA, *e.g*., device 102, may be configured to transmit the DTS frame over one or more channels of the plurality of channels, *e.g*., as described below.

A responder station, *e.g*., device 102, may be configured to determine and/or set the content of one or more fields of the DTS frame, based, for example, on the responder's observation of the CCA state, for example, according to a definition of different multiple channel access scenarios, *e.g*., as follows in Table 1:

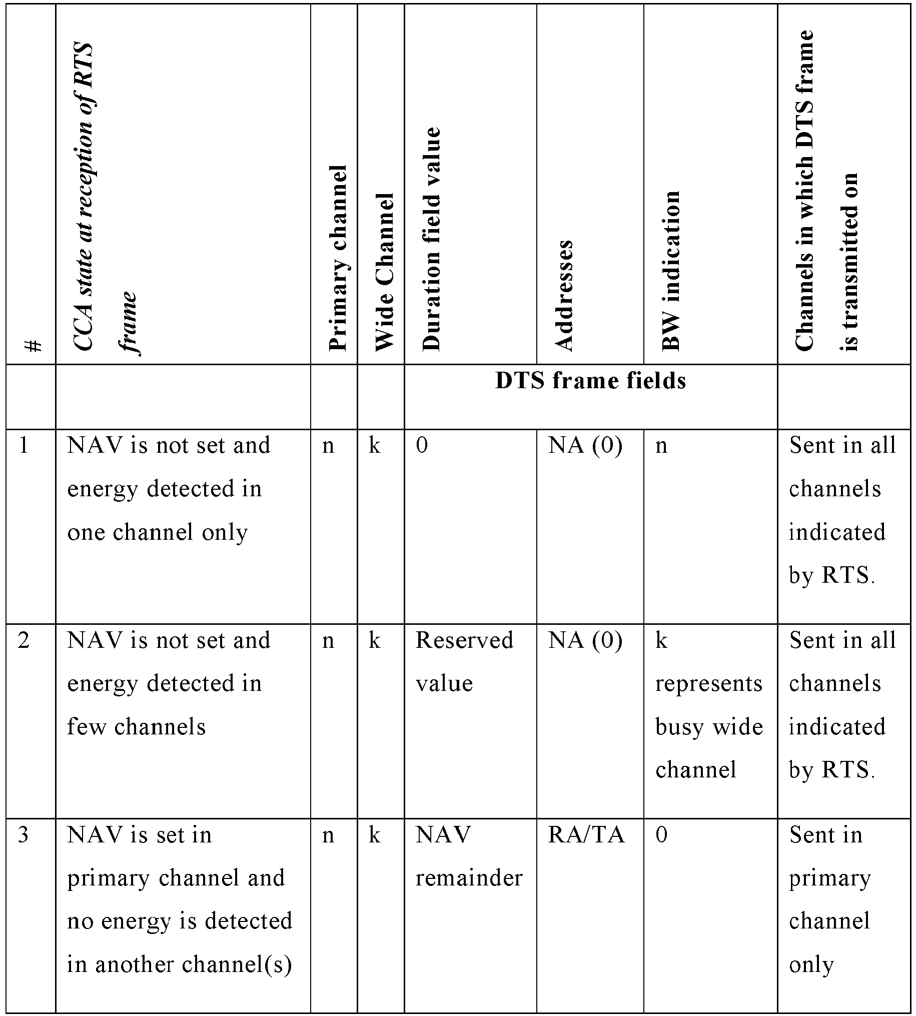

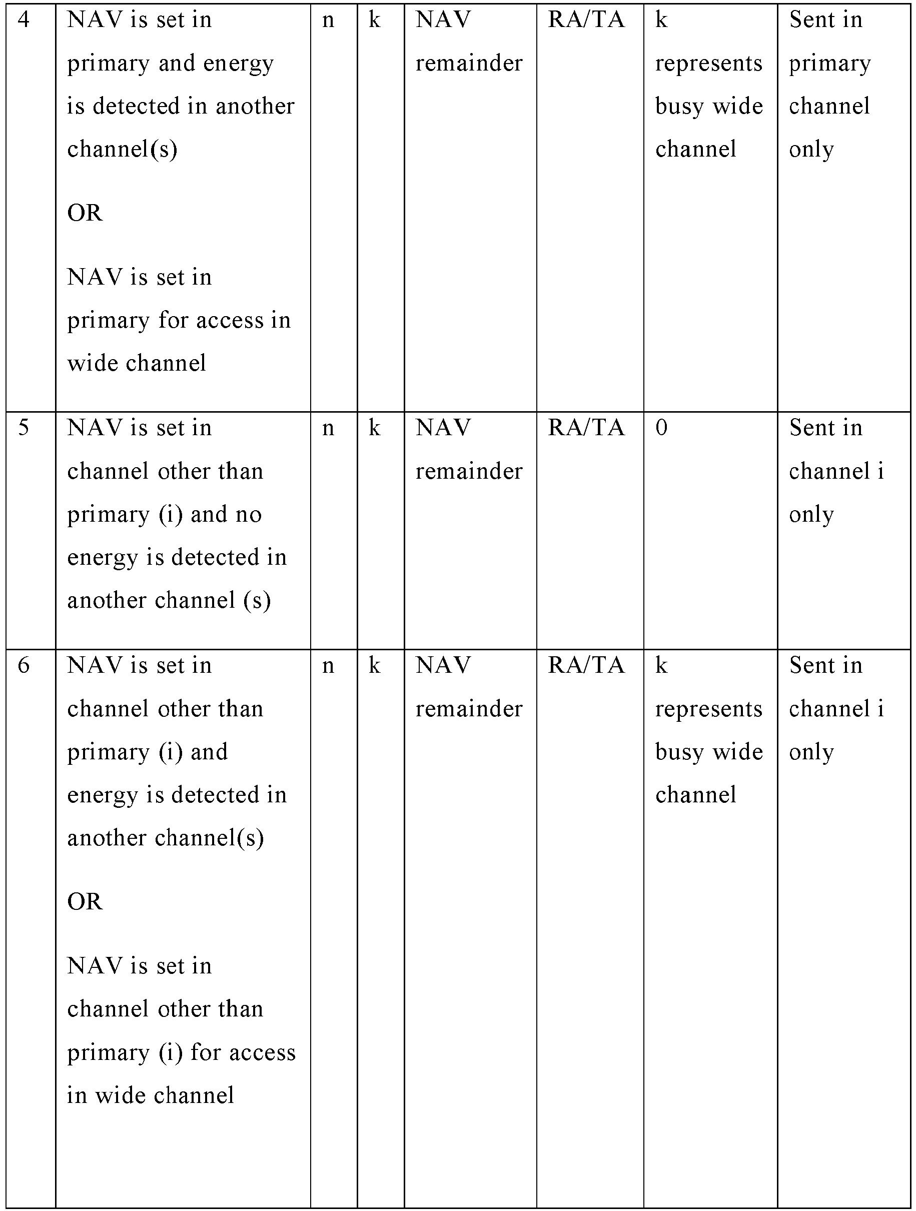

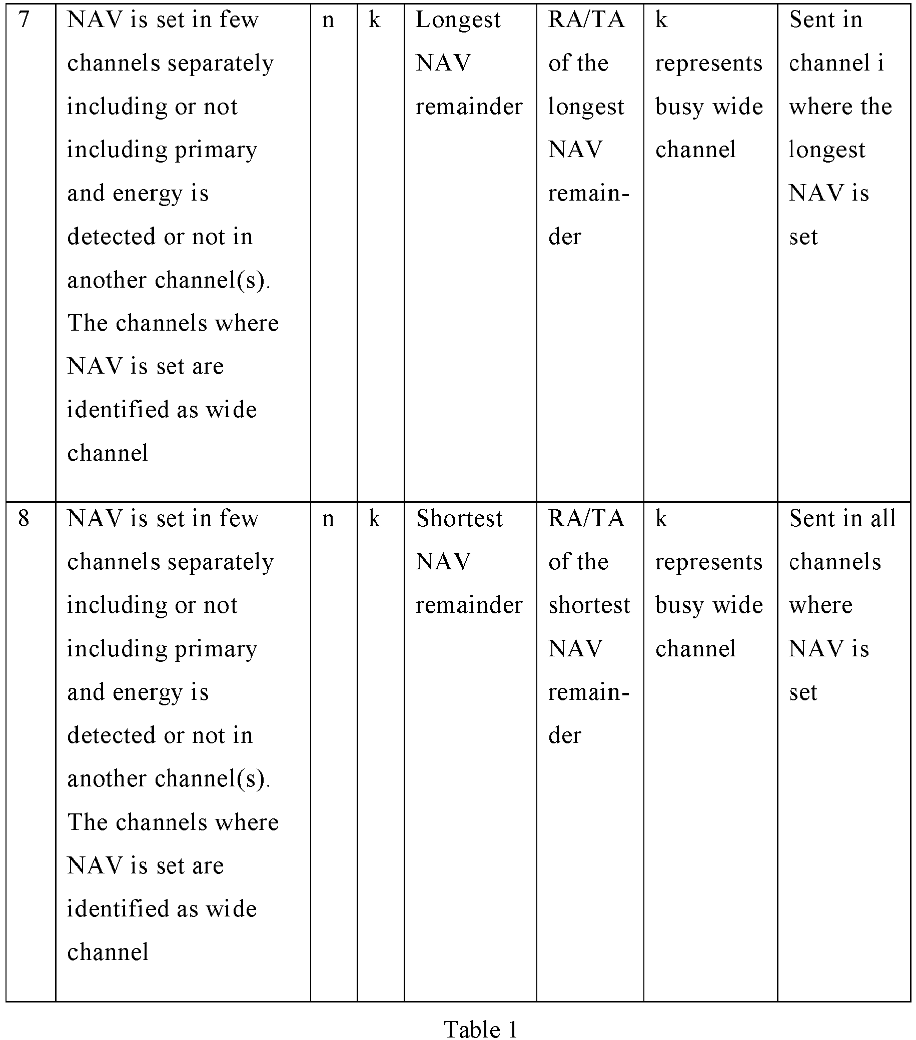

For example, Table 1 may be implemented to define a DTS frame setup for a plurality of different CCA busy state cases. For example, in case (2) of Table 1, the reserved value in the Duration field may be used, for example, to distinguish from the case (1), *e.g.*, if there is not enough space in the BW field to indicate the channel number of single and bonded channels. For example, the BW value may be set to 0, for example, when the presented information is relevant only for the channel where the DTS frame is sent.

For example, in case where the NAV is not 0, this setting causes the responder STA 102 to issue a DTS frame; the DTS frame may be sent only over the channel for which the NAV is set, *e.g*., to avoid excessive transmit deferring in other channels, for example, by legacy stations.

For example, for cases 1 and/or 2, another option may be to send a DTS in a wide channel that includes the primary channel *n* but does not include channels where energy is detected. This option may assume that an RTS 212 is not received in the channels where energy is detected. In this case, interference that DTS transmission may cause may be reduced or even prevented. In other situations, a responder station, *e.g*., device 102, may be configured to determine and/or set the content of one or more fields of the DTS frame, according to any other additional or alternative definition of scheme, scenario and/or cases.

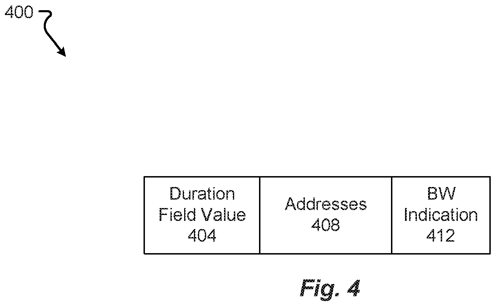

An embodiment of a signalling diagram 300 that sends the DTS frame may be as shown in Fig. 3. The RTS frames 216 may be as previously described in Fig. 2. Different from what is shown in Fig. 2, a DTS frames 304a-304c can be sent by STA 2 102 instead of a CTS frame 208. The DTS frame 304 can be as explained above. Depending on the context described in Table 1, the DTS frame 304a may be sent in a primary channel 204a, while other DTS frames 304b, 304c are not sent. In other contexts, DTS frame 304a is not sent but another DTS frame 304b, 304c is sent. The DTS frame 304 may include data such as that data described, for example within data structure 400 described in conjunction with Fig. 4.

The data structure 400, which can represent a DTS frame 304, may be as shown in Fig. 4. The data structure 400 can be a frame that is transmitted, stored, and/or received by the various devices 102, 140 described herein. The DTS data structure 400 can include one or more of, but is not limited to a duration field value 404, an address 408, and/or a bandwidth (BW) indication 412.

The duration field value 404 can contain any NAV information that may be needed by the STA 140 or AP 102. A NAV is a carrier-sensing mechanism. The MAC layer frame headers contain a duration field that specifies the transmission time required for a frame, in which time the medium will be busy. The stations listening on the wireless medium read the duration field 404 and set their NAV, which is an indicator for a station on how long it must defer from accessing the medium.

In some configurations, the duration field 404 can provide a duration value associated with the remainder of time left before the NAV expires. This remainder may be a shortest remainder among two or more remainders on two or more channels. In another situation, the remainder may be a longest remainder among two or more remainders on two or more channels. Depending on the situation, the responding STA 102 may provide the shortest or longest remainder for the NAV, as shown in Table 1.

The address 408 can include one or more of the receive address (RA) and/or the transmit address (TA) for the STAs 102,140 involved in the transmission causing the channel to be busy. The RA and/or TA may be the MAC address for the STAs 102,140. If there are more than one pair of STAs 102,140 causing two or more channels to be busy, the addresses associated with the longest or shortest NAV may be provided, as shown in Table 1.

A BW indication 412 can indicate whether the wide channel is busy, the primary channel is busy, or one of the other channels (not the primary channel) is busy. As such, the BW indication 412 can include a first symbol "*k*" if the wide channel is busy, an *"n"* if the primary channel is busy, or a "*0*" if another or no channel is busy. These settings for these three indications may be as shown in Table 1.

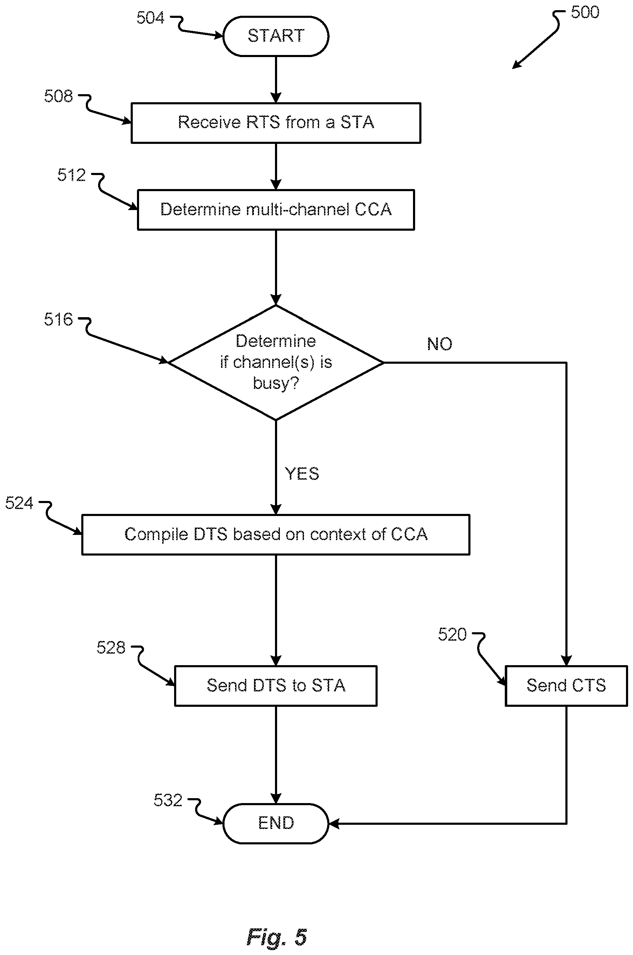

A process 500, conducted by the AP 102a (receiving STA) and STA 140a (sending STA), for providing a DTS for a multi-band transmission may be as shown in Fig. 5. A general order for the steps of the method 500 is shown in Fig. 5. Generally, the method 500 starts with a start operation 504 and ends with operation 532. The method 500 can include more or fewer steps or can arrange the order of the steps differently than those shown in Fig. 5. The method 500 can be executed as a set of computer-executable instructions executed by a computer system or processor and encoded or stored on a computer readable medium. In other configurations, the method 500 may be executed by a series of components, circuits, gates, etc. created in a hardware device, such as a System of Chip (SOC), Application Specific Integrated Circuit (ASIC), and/or a Field Programmable Gate Array (FPGA). Hereinafter, the method 500 shall be explained with reference to the systems, components, circuits, modules, software, data structures, signalling processes, etc. described in conjunction with Figs. 1-4, 7, and 8.

A station 102 receives a Request to Send (RTS) frame 216 over a wide channel comprising two or more directional channels 204a, 204b, and/or 204c, in step 508. The RTS frame 216 may be received by the radio 147, which can comprise the radio frequency (RF) components including one or more of, but not limited to, the receiver 868, the transmitter 864, the MAC module 860, and/or the PHY module 856. The RTS 216 is then sent to the controller 820 (or 154) for processing.

The controller 820 can then evaluate the CCS settings at the STA 102, which can determine if any NAV is set for one or more of the channels 204a, 204b, and/or 204c, in step 512. Further, the controller 820 can obtain information about any sensed energy on one or more of the channels 204a, 204b, and/or 204c, for example, by the RF components mentioned above. If a NAV is set and/or there is sensed energy on a channel, the controller 820 can determine that a channel 204a, 204b, and/or 204c, in the wide channel, is busy, in step 516. If no channel is busy, the method 500 proceeds "NO" to step 520, where the STA 102 sends a CTS frame, as described in conjunction with Fig. 2. If at least one channel is busy, the method 500 proceeds "YES" to step 524.

In step 524, the controller 820 composes or compiles a DTS 400 based on the context of the CCA. In other words, the controller 820 generates the settings for the duration field value 404 based on any NAV information that shows one or more channels busy, records the addresses 408 based on the RA and/or TA of the STAs involved in the transmission on at least one busy channel, and provides the BW indication 412 based on whether the wide channel and/or a single channel are busy. This information is provided in the DTS 400 and sent to the RF components mentioned above. The settings 400 can be based on the contexts described in Table 1.

The RF components mentioned above transmit the DTS 304, including information 400, to the STA 140, in step 528. The DTS may be sent over one or more of the channels 204a-204c as shown in Fig. 2.

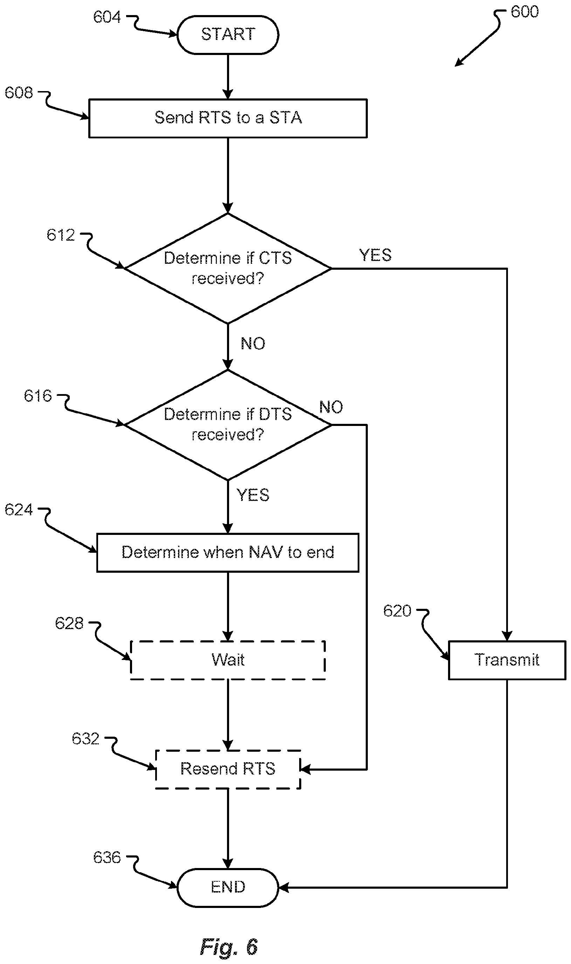

Another process 600, conducted by the STA 140, for receiving a DTS may be as shown in Fig. 6. A general order for the steps of the method 600 is shown in Fig. 6. Generally, the method 600 starts with a start operation 604 and ends with operation 636. The method 600 can include more or fewer steps or can arrange the order of the steps differently than those shown in Fig. 6. The method 600 can be executed as a set of computer-executable instructions executed by a computer system or processor and encoded or stored on a computer readable medium. In other configurations, the method 500 may be executed by a series of components, circuits, gates, etc. created in a hardware device, such as a System of Chip (SOC), Application Specific Integrated Circuit (ASIC), and/r a Field Programmable Gate Array (FPGA). Hereinafter, the method 600 shall be explained with reference to the systems, components, circuits, modules, software, data structures, signalling processes, etc. described in conjunction with Figs. 1-5, 7, and 8.

A STA 140 can send a Request to Send (RTS) frame 216 over a wide channel comprising two or more directional channels 204a, 204b, and/or 204c, in step 608. The RTS frame 216 may be sent by the radio 147, which can comprise the radio frequency (RF) components including one or more of, but not limited to, the receiver 868, the transmitter 864, the MAC module 860, and/or the PHY module 866. The RTS 216 is created by the controller 820 (or 164) and sent to the radio 147 for transmission in response to needing to send data.

The controller 820 can then determine if a clear to send (CTS) frame 208 is received on one or more of the channels 204a, 204b, and/or 204c, in step 612. If a CTS frame 208 is received at the radio 147, the radio 147 sends the CTS frame 208 to the controller 820. The controller 820 then determines the CTS frame 208 is in response to the RTS frame 204. If no CTS frame 208 is received, the method 600 proceeds "NO" to step 616. If a CTS frame 208 is received, the method 600 proceeds "YES" to step 620, where the STA 102 transmits data to the other STA 102, as described in conjunction with Fig. 2.

In step 616, the STA 102 determines if a DTS frame 304 is received. If a DTS frame 208 is received at the radio 147, the radio 147 sends the DTS frame 208 to the controller 820. The controller 820 then determines that the DTS frame 208 is in response to the RTS frame 204. If no DTS frame 208 is received, the method 600 proceeds "NO" to optional step 632. If a DTS frame 208 is received, the method 600 proceeds "YES" to step 620, where the controller 820 can determine when the NAV expires based on a duration value in the Duration field 404. As the duration value is a time limit or duration, the controller 820 can determine at what point in time the STA 104 can again contend for the wireless channel(s). Thus, the controller 628 can optionally wait some period of time for the NAV to end, in optional step 628. Then, the controller 820 can resend the RTS 216, in optional step 632, as has been explained in conjunction with step 608.

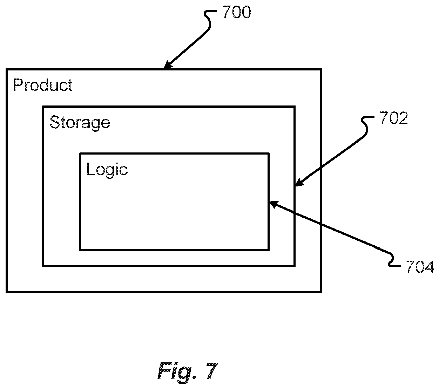

Reference is made to Fig. 7, which schematically illustrates a product of manufacture 700. Product 700 may include one or more tangible computer-readable non-transitory storage media 702, which may include computer-executable instructions, *e.g*., implemented by logic 704, operable to, when executed by at least one computer processor, enable the at least one computer processor to implement one or more operations at device 102 (Fig. 1A), device 140 (Fig. 1A), radio 114 (Fig. 1B), radio 144 (Fig. 1B), transmitter 118 (Fig. 1B), transmitter 148 (Fig. 1B), receiver 116 (Fig. 1B), receiver 146 (Fig. 1B), controller 124 (Fig. 1B), and/or controller 154 (Fig. 1B), etc. and/or to perform, trigger and/or implement one or more operations, communications and/or functionalities as described above with reference to Figs. 1A through 6, and/or one or more operations described herein. The phrase "non-transitory machine-readable medium" is directed to include all computer-readable media, with the sole exception being a transitory propagating signal.

Product 700 and/or machine-readable storage medium 702 may include one or more types of computer-readable storage media capable of storing data, including volatile memory, non-volatile memory, removable or non-removable memory, erasable or non-erasable memory, writeable or re-writeable memory, and the like. For example, machine-readable storage medium 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (*e.g*., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, *e.g*., a modem, radio or network connection.

Logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In addition or in the alternative, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

Fig. 8 illustrates an exemplary hardware diagram of a device 800, such as a wireless communications device, mobile device, access point, station, and/or the like, that is adapted to implement the technique(s) discussed herein. Operation will be discussed in relation to the components in Fig. 8 appreciating that each separate device in a system, *e.g*., station, AP, proxy server, etc., can include one or more of the components shown in the figure, with the components each being optional.

In addition to well-known componentry (which has been omitted for clarity), the device 800 includes interconnected elements (with links 5 omitted for clarity) including one or more of: one or more antennas 804, an interleaver/deinterleaver 808, an analog front end (AFE) 812, memory/storage/cache 816, controller/microprocessor 820, MAC circuitry 822, modulator/demodulator 824, encoder/decoder 828, GPU 836, accelerator 842, a multiplexer/demultiplexer 840, and wireless radio components such as a Wi-Fi/BT/BLE PHY module 856, a Wi-Fi/BT/BLE MAC module 860, transmitter 864 and receiver 868. The various elements in the device 800 are connected by one or more links (not shown, again for sake of clarity). As one example, an DTS module 844 can be embodied as a process executing on a processor or controller, such as processor 820 with the cooperation of the memory 816. The DTS module 844 could also be embodied as an ASIC and/or as part of a system on a chip. In some configurations, there can be multiple instances of the PHY Module/Circuitry 856, MAC circuitry 822, transmitter 864, and/or receiver 868, wherein each instance of the PHY Module/Circuitry 856, MAC circuitry 822, transmitter 864, and/or receiver 868 sends/receives data over a specific band (*e.g.,* 2.45 GHz, 915 MHz, 5.2 GHz, etc.) to facilitate multi-band transmissions.

The device 800 can have one more antennas 804, for use in wireless communications such as multi-input multi-output (MIMO) communications, multi-user multi-input multi-output (MU-MIMO) communications Bluetooth^{®}, LTE, RFID, 4G, LTE, DMG, EDMG, etc. The antenna(s) 804 can include, but are not limited to one or more of directional antennas, omnidirectional antennas, monopoles, patch antennas, loop antennas, microstrip antennas, dipoles, and any other antenna(s) suitable for communication transmission/reception. In an exemplary embodiment, transmission/reception using MIMO may require particular antenna spacing. In another exemplary embodiment, MIMO transmission/reception can enable spatial diversity allowing for different channel characteristics at each of the antennas. In yet another embodiment, MIMO transmission/reception can be used to distribute resources to multiple users.

Antenna(s) 804 generally interact with the Analog Front End (AFE) 812, which is needed to enable the correct processing of the received modulated signal and signal conditioning for a transmitted signal. The AFE 812 can be functionally located between the antenna and a digital baseband system to convert the analog signal into a digital signal for processing and vice-versa.

The device 800 can also include a controller/microprocessor 820 and a memory/storage/cache 816. The device 800 can interact with the memory/storage/cache 816 which may store information and operations necessary for configuring and transmitting or receiving the information described herein. The memory/storage/cache 816 may also be used in connection with the execution of application programming or instructions by the controller/microprocessor 820, and for temporary or long term storage of program instructions and/or data. As examples, the memory/storage/cache 820 may comprise a computer-readable device, RAM, ROM, DRAM, SDRAM, and/or other storage device(s) and media.

The controller/microprocessor 820 may comprise a general purpose programmable processor or controller for executing application programming or instructions related to the device 800. Furthermore, the controller/microprocessor 820 can perform operations for configuring and transmitting information as described herein. The controller/microprocessor 820 may include multiple processor cores, and/or implement multiple virtual processors. Optionally, the controller/microprocessor 820 may include multiple physical processors. By way of example, the controller/microprocessor 820 may comprise a specially configured Application Specific Integrated Circuit (ASIC) or other integrated circuit, a digital signal processor(s), a controller, a hardwired electronic or logic circuit, a programmable logic device or gate array, a special purpose computer, or the like.

The device 800 can further include a transmitter 864 and receiver 868 which can transmit and receive signals, respectively, to and from other wireless devices and/or access points using the one or more antennas 804. Included in the device 800 circuitry is the medium access control or MAC Circuitry 822. MAC circuitry 822 provides for controlling access to the wireless medium. In an exemplary embodiment, the MAC circuitry 822 may be arranged to contend for the wireless medium and configure frames or packets for communicating over the wireless medium.

The PHY Module/Circuitry 856 controls the electrical and physical specifications for device 800. In particular, PHY Module/Circuitry 856 manages the relationship between the device 800 and a transmission medium. Primary functions and services performed by the physical layer, and in particular the PHY Module/Circuitry 856, include the establishment and termination of a connection to a communications medium, and participation in the various process and technologies where communication resources shared between, for example, among multiple STAs. These technologies further include, for example, contention resolution and flow control and modulation or conversion between a representation digital data in user equipment and the corresponding signals transmitted over the communications channel. These are signals are transmitted over the physical cabling (such as copper and optical fiber) and/or over a radio communications (wireless) link. The physical layer of the OSI model and the PHY Module/Circuitry 856 can be embodied as a plurality of sub components. These sub components or circuits can include a Physical Layer Convergence Procedure (PLCP) which acts as an adaption layer. The PLCP is at least responsible for the Clear Channel Assessment (CCA) and building packets for different physical layer technologies. The Physical Medium Dependent (PMD) layer specifies modulation and coding techniques used by the device and a PHY management layer manages channel tuning and the like. A station management sub layer and the MAC circuitry 822 handle coordination of interactions between the MAC and PHY layers.

The interleaver/deinterleaver 808 cooperates with the various PHY components to provide Forward Error correction capabilities. The modulator/demodulator 824 similarly cooperates with the various PHY components to perform modulation which in general is a process of varying one or more properties of a periodic waveform, referred to and known as a carrier signal, with a modulating signal that typically contains information for transmission. The encoder/decoder 828 manages the encoding/decoding used with the various transmission and reception elements in device 800.

The MAC layer and components, and in particular the MAC module 860 and MAC circuitry 822 provide functional and procedural means to transfer data between network entities and to detect and possibly correct errors that may occur in the physical layer. The MAC module 860 and MAC circuitry 822 also provide access to contention-based and contention-free traffic on different types of physical layers, such as when multiple communications technologies are incorporated into the device 800. In the MAC layer, the responsibilities are divided into the MAC sub-layer and the MAC management sub-layer. The MAC sub-layer defines access mechanisms and packet formats while the MAC management sub-layer defines power management, security and roaming services, etc.

The device 800 can also optionally contain a security module (not shown). This security module can contain information regarding but not limited to, security parameters required to connect the device to an access point or other device or other available network(s), and can include WEP or WPA/WPA-2 (optionally + AES and/or TKIP) security access keys, network keys, etc. The WEP security access key is a security password used by Wi-Fi networks. Knowledge of this code can enable a wireless device to exchange information with the access point and/or another device. The information exchange can occur through encoded messages with the WEP access code often being chosen by the network administrator. WPA is an added security standard that is also used in conjunction with network connectivity with stronger encryption than WEP.

The accelerator 842 can cooperate with MAC circuitry 822 to, for example, perform real-time MAC functions. The GPU 836 can be a specialized electronic circuit designed to rapidly manipulate and alter memory to accelerate the creation of data such as images in a frame buffer. GPUs are typically used in embedded systems, mobile phones, personal computers, workstations, and game consoles. GPUs are very efficient at manipulating computer graphics and image processing, and their highly parallel structure makes them more efficient than general-purpose CPUs for algorithms where the processing of large blocks of data is done in parallel.

The DTS module 844 can be a component present in the AP 102 and or STA 140. The DTS module can perform the methods 500 and 600 described herein. Thus, the DTS module can send DTS frames 400 or receive the DTS frames 400 and read, process, etc. the data within those DTS frames 400. As such, the DTS module 844 can determine, from the duration value and/or NAV settings in the duration field 404, a time a STA must wait before sending another RTS or contending for the wireless medium. This determination can be provided to the controller 820 to wait for the time. The DTS module can also provide the information in the DTS frame 400 and generate the DTS frame to be sent to the STAs.

Functions, operations, components and/or features described herein with reference to one or more embodiments, may be combined with, or may be utilized in combination with, one or more other functions, operations, components and/or features described herein with reference to one or more other embodiments, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure. In the detailed description, numerous specific details are set forth in order to provide a thorough understanding of the disclosed techniques. However, it will be understood by those skilled in the art that the present techniques may be practiced without these specific details. In other instances, well-known methods, procedures, components and circuits have not been described in detail so as not to obscure the present disclosure.

Although embodiments are not limited in this regard, discussions utilizing terms such as, for example, "processing," "computing," "calculating," "determining," "establishing", "analysing", "checking", or the like, may refer to operation(s) and/or process(es) of a computer, a computing platform, a computing system, a communication system or subsystem, or other electronic computing device, that manipulate and/or transform data represented as physical (*e.g*., electronic) quantities within the computer's registers and/or memories into other data similarly represented as physical quantities within the computer's registers and/or memories or other information storage medium that may store instructions to perform operations and/or processes.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (*e.g*., electronic) quantities within the computer's registers and/or memories into other data similarly represented as physical quantities within the computer's registers and/or memories or other information storage medium that may store instructions to perform operations and/or processes.

References to "one embodiment", "an embodiment", "demonstrative embodiment", "various embodiments" etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Although embodiments are not limited in this regard, the terms "plurality" and "a plurality" as used herein may include, for example, "multiple" or "two or more". The terms "plurality" or "a plurality" may be used throughout the specification to describe two or more components, devices, elements, units, parameters, circuits, or the like. For example, "a plurality of stations" may include two or more stations.

The term "wireless device" or "wireless communications device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a set of switched beam antennas, and/or the like.

The phrases "directional multi-gigabit (DMG)" and "directional band" (DBand), as used herein, may relate to a frequency band wherein the Channel starting frequency is above 45 GHz. In one example, DMG communications may involve one or more directional links to communicate at a rate of multiple gigabits per second, for example, at least 1 Gigabit per second, *e.g*., 7 Gigabit per second, or any other rate.

It may be advantageous to set forth definitions of certain words and phrases used throughout this document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, interconnected with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, circuitry, firmware or software, or some combination of at least two of the same. It should be noted that the functionality associated with any particular controller may be centralized or distributed, whether locally or remotely. Definitions for certain words and phrases are provided throughout this document and those of ordinary skill in the art should understand that in many, if not most instances, such definitions apply to prior, as well as future uses of such defined words and phrases.

The exemplary embodiments are described in relation to communications systems, as well as protocols, techniques, means and methods for performing communications, such as in a wireless network, or in general in any communications network operating using any communications protocol(s). Examples of such are home or access networks, wireless home networks, wireless corporate networks, and the like. It should be appreciated however that in general, the systems, methods and techniques disclosed herein will work equally well for other types of communications environments, networks and/or protocols.

For purposes of explanation, numerous details are set forth in order to provide a thorough understanding of the present techniques. It should be appreciated however that the present disclosure may be practiced in a variety of ways beyond the specific details set forth herein. Furthermore, while the exemplary embodiments illustrated herein show various components of the system collocated, it is to be appreciated that the various components of the system can be located at distant portions of a distributed network, such as a communications network, node, within a Domain Master, and/or the Internet, or within a dedicated secured, unsecured, and/or encrypted system and/or within a network operation or management device that is located inside or outside the network. As an example, a Domain Master can also be used to refer to any device, system or module that manages and/or configures or communicates with any one or more aspects of the network or communications environment and/or transceiver(s) and/or stations and/or access point(s) described herein.

Thus, it should be appreciated that the components of the system can be combined into one or more devices, or split between devices, such as a transceiver, an access point, a station, a Domain Master, a network operation or management device, a node or collocated on a particular node of a distributed network, such as a communications network. As will be appreciated from the following description, and for reasons of computational efficiency, the components of the system can be arranged at any location within a distributed network without affecting the operation thereof. For example, the various components can be located in a Domain Master, a node, a domain management device, such as a MIB, a network operation or management device, a transceiver(s), a station, an access point(s), or some combination thereof. Similarly, one or more of the functional portions of the system could be distributed between a transceiver and an associated computing device/system.

Furthermore, it should be appreciated that the various links, including the communications channel(s) connecting the elements, can be wired or wireless links or any combination thereof, or any other known or later developed element(s) capable of supplying and/or communicating data to and from the connected elements. The term module as used herein can refer to any known or later developed hardware, circuitry, software, firmware, or combination thereof, that is capable of performing the functionality associated with that element. The terms determine, calculate, and compute and variations thereof, as used herein are used interchangeable and include any type of methodology, process, technique, mathematical operational or protocol.

Moreover, while some of the exemplary embodiments described herein are directed toward a transmitter portion of a transceiver performing certain functions, or a receiver portion of a transceiver performing certain functions, this disclosure is intended to include corresponding and complementary transmitter-side or receiver-side functionality, respectively, in both the same transceiver and/or another transceiver(s), and vice versa.

The exemplary embodiments are described in relation to enhanced GFDM communications. However, it should be appreciated, that in general, the systems and methods herein will work equally well for any type of communication system in any environment utilizing any one or more protocols including wired communications, wireless communications, powerline communications, coaxial cable communications, fiber optic communications, and the like.

The exemplary systems and methods are described in relation to IEEE 802.11 and/or Bluetooth^{®} and/or Bluetooth^{®} Low Energy transceivers and associated communication hardware, software and communication channels. However, to avoid unnecessarily obscuring the present disclosure, the following description omits well-known structures and devices that may be shown in block diagram form or otherwise summarized.

Some embodiments may involve wireless communications according to one or more other wireless communication standards. Examples of other wireless communications technologies and/or standards that may be used in various embodiments may include - without limitation - other IEEE wireless communication standards such as the IEEE 802.11, IEEE 802.11a, IEEE 802.11b, IEEE 802.11g, IEEE 802.11n, IEEE 802.11u, IEEE 802.11ac, IEEE 802.11ad, IEEE 802.11af, IEEE 802.11 ah, IEEE 802.11ay standards, or other current or future IEEE 802.11 standards, Wi-Fi Alliance (WFA) wireless communication standards, such as, Wi-Fi, Wi-Fi Direct, Wi-Fi Direct Services, Wireless Gigabit (WiGig), WiGig Display Extension (WDE), WiGig Bus Extension (WBE), WiGig Serial Extension (WSE) standards and/or standards developed by the WFA Neighbor Awareness Networking (NAN) Task Group, machine-type communications (MTC) standards such as those embodied in 3GPP Technical Report (TR) 23.887, 3GPP Technical Specification (TS) 22.368, and/or 3GPP TS 23.682, and/or near-field communication (NFC) standards such as standards developed by the NFC Forum, including any predecessors, revisions, progeny, and/or variants of any of the above.

Some embodiments may involve wireless communications performed according to one or more broadband wireless communication standards. For example, various embodiments may involve wireless communications performed according to one or more 3rd Generation Partnership Project (3GPP), 3GPP Long Term Evolution (LTE), and/or 3GPP LTE-Advanced (LTE-A) technologies and/or standards, including their predecessors, revisions, progeny, and/or variants. Additional examples of broadband wireless communication technologies/standards that may be utilized in some embodiments may include - without limitation - Global System for Mobile Communications (GSM)/Enhanced Data Rates for GSM Evolution (EDGE), Universal Mobile Telecommunications System (UMTS)/High Speed Packet Access (HSPA), and/or GSM with General Packet Radio Service (GPRS) system (GSM/GPRS), IEEE 802.16 wireless broadband standards such as IEEE 802.16m and/or IEEE 802.16p, International Mobile Telecommunications Advanced (IMT-ADV), Worldwide Interoperability for Microwave Access (WiMAX) and/or WiMAX II, Code Division Multiple Access (CDMA) 2000 (*e.g.,* CDMA2000 1xRTT, CDMA2000 EV-DO, CDMA EV-DV, and so forth), High Performance Radio Metropolitan Area Network (HIPERMAN), Wireless Broadband (WiBro), High Speed Downlink Packet Access (HSDPA), High Speed Orthogonal Frequency-Division Multiplexing (OFDM) Packet Access (HSOPA), High-Speed Uplink Packet Access (HSUPA) technologies and/or standards, including their predecessors, revisions, progeny, and/or variants.

Exemplary aspects are directed toward:
A wireless communications device comprising: a radio frequency (RF) component to: receive a Request to Send (RTS) frame over a wide channel comprising two or more directional channels from a second station (STA); transmit a Denial to Send (DTS) frame over one or more of the two or more directional channels; and a controller in communication with the (RF) component, the controller to: generate the DTS frame, wherein the DTS frame comprises at least a Duration field, the Duration field to indicate whether a Network Allocation Vector (NAV) is set at the wireless communication device for at least one of the two or more directional channels or to provide a duration value to indicate a length of time for which the NAV will be set.

Any of the one or more above aspects, wherein the DTS frame further comprises an address field to indicate an address of a third STA occupying a channel for which the NAV is set at the wireless communication device.

Any of the one or more above aspects, wherein the address is a receive address and/or a transmit address.

Any of the one or more above aspects, wherein the DTS frame further comprises a Bandwidth (BW) indication, wherein the BW indication indicates whether at least part of the wide channel is detected to be busy.

Any of the one or more above aspects, wherein the controller further detects whether one or more of the directional channels is busy.

Any of the one or more above aspects, wherein the BW indication comprises an indication of a primary channel of the wide channel, when the NAV is not set and only one channel of the plurality of directional channels is detected to be busy.

Any of the one or more above aspects, wherein the BW indication comprises an indication of the wide channel, when more than one channel of the two or more directional channels is detected to be busy.

Any of the one or more above aspects, wherein the BW indication comprises an indication of the wide channel, when the NAV is set for a primary channel of the wide channel and at least one non-primary channel is detected as busy.

Any of the one or more above aspects, wherein the BW indication comprises an indication of the wide channel, when the NAV is set for access in the wide channel.

Any of the one or more above aspects, wherein the RF component transmits the DTS frame over one of: all of the two or more directional channels; the primary channel of the wide channel; or a channel of the wide channel for which the NAV is set.

A method comprising: a radio frequency (RF) component, of a wireless communications device, receiving a Request to Send (RTS) frame over a wide channel comprising two or more directional channels from a second station (STA); a controller, of the wireless communications device, generating a Denial to Send (DTS) frame, wherein the DTS frame comprises at least a Duration field, the Duration field to indicate whether a Network Allocation Vector (NAV) is set at the wireless communication device for at least one of the two or more directional channels or to provide a duration value to indicate a length of time for which the NAV will be set; and the RF component transmitting the DTS frame over one or more of the two or more directional channels.

Any of the one or more above aspects, wherein the DTS frame further comprises an address field to indicate an address of a third STA occupying a channel for which the NAV is set at the wireless communication device.

Any of the one or more above aspects, wherein the address is a receive address and/or a transmit address.

Any of the one or more above aspects, wherein the DTS frame further comprises a Bandwidth (BW) indication, wherein the BW indication indicates whether at least part of the wide channel is detected to be busy.

Any of the one or more above aspects, further comprising detecting whether one or more of the directional channels is busy.

Any of the one or more above aspects, wherein the BW indication comprises an indication of a primary channel of the wide channel, when the NAV is not set and only one channel of the plurality of directional channels is detected to be busy.

Any of the one or more above aspects, wherein the BW indication comprises an indication of the communications channel, when more than one channel of the two or more directional channels is detected to be busy.

Any of the one or more above aspects, wherein the BW indication comprises an indication of the communications channel, when the NAV is set for a primary channel of the communications channel and at least one non-primary channel is detected as busy.

Any of the one or more above aspects, wherein the BW indication comprises an indication of the communications channel, when the NAV is set for access in the communications channel.

Any of the one or more above aspects, wherein the RF component transmits the DTS frame over one of: all of the two or more directional channels; the primary channel of the communications channel; or a channel of the communications channel for which the NAV is set.

A non-transitory information storage media having stored thereon one or more instructions, that when executed by one or more processors, cause a wireless communications device to perform a method, the method comprising: receiving via an RF component, a Request to Send (RTS) frame over a communications channel;; processing the Request to Send, RTS, frame received over the communications channel; generating a Denial to Send (DTS) frame, wherein the DTS frame comprises at least a Duration field, the Duration field to indicating: whether a Network Allocation Vector (NAV) is set at the wireless communication device for at least one of two or more directional channels of the communications channel, or a duration value specifying a length of time for which the NAV is set; and transmitting, via the RF component, the DTS frame over one or more of the two or more directional channels; and wherein the DTS frame further comprises a channel bandwidth indication, wherein the indication indicates which at least part of the communications channel is detected to be busy.

Any of the one or more above aspects, wherein the DTS frame further comprises an address field to indicate an address of a third STA occupying a channel for which the NAV is set at the wireless communication device.

Any of the one or more above aspects, wherein the address is a receive address and/or a transmit address.

Any of the one or more above aspects, wherein the method further comprises detecting whether one or more of the directional channels is busy.

Any of the one or more above aspects, wherein the BW indication comprises an indication of a primary channel of the communications channel, when the NAV is not set and only one channel of the plurality of directional channels is detected to be busy.

Any of the one or more above aspects, wherein the BW indication comprises an indication of the communications channel, when more than one channel of the two or more directional channels is detected to be busy.

Any of the one or more above aspects, wherein the BW indication comprises an indication of the communications channel, when the NAV is set for a primary channel of the communications channel and at least one non-primary channel is detected as busy.

Any of the one or more above aspects, wherein the BW indication comprises an indication of the communications channel, when the NAV is set for access in the communications channel.

Any of the one or more above aspects, wherein the RF component transmits the DTS frame over one of: all of the two or more directional channels; the primary channel of the communications channel; or a channel of the communications channel for which the NAV is set.

A wireless communications device comprising: a radio frequency (RF) component to: send a Request to Send (RTS) frame over a communications channel comprising two or more directional channels to a second station (STA); receive a Denial to Send (DTS) frame over one or more of the two or more directional channels, wherein the DTS frame comprises at least a Duration field (404), the Duration field indicating: whether a Network Allocation Vector (NAV) is set at the wireless communication device for at least one of two or more directional channels of the communications channel (204), or a duration value specifying a length of time for which the NAV is set; and a controller in communication with the RF component, the controller to: read the DTS frame, wherein the DTS frame further comprises a channel bandwidth indication (412), wherein the indication indicates which at least part of the communications channel is detected to be busy.

Any of the one or more above aspects, wherein the DTS frame further comprises an address field to indicate an address of a third STA occupying a channel for which the NAV is set at the second STA.

Any of the one or more above aspects, wherein the address is a receive address and/or a transmit address.

Any of the one or more above aspects, wherein, based on the NAV, the wireless communications devices waits a duration before sending a second RTS.

Any of the one or more above aspects, wherein the BW indication comprises an indication of a primary channel of the communications channel, when the NAV is not set and only one channel of the plurality of directional channels is detected to be busy.

Any of the one or more above aspects, wherein the BW indication comprises an indication of the communications channel, when more than one channel of the two or more directional channels is detected to be busy.

Any of the one or more above aspects, wherein the BW indication comprises an indication of the communications channel, when the NAV is set for a primary channel of the communications channel and at least one non-primary channel is detected as busy.

Any of the one or more above aspects, wherein the BW indication comprises an indication of the communications channel, when the NAV is set for access in the communications channel.

Any of the one or more above aspects, wherein the RF component receives the DTS frame over one of: all of the two or more directional channels; the primary channel of the communications channel; or a channel of the communications channel for which the NAV is set.

A method comprising: a radio frequency (RF) component, of a wireless communications device, sending a Request to Send (RTS) frame over a communications channel comprising two or more directional channels to a second station (STA); the RF component receiving a Denial to Send (DTS) frame over one or more of the two or more directional channels; and a controller, of the wireless communications device, reading the DTS frame, wherein the DTS frame comprises at least a Duration field (404), the Duration field indicating: whether a Network Allocation Vector (NAV) is set at the wireless communication device for at least one of two or more directional channels of the communications channel (204), or a duration value specifying a length of time for which the NAV is set, and wherein the DTS frame further comprises a channel bandwidth indication (412), wherein the indication indicates which at least part of the communications channel is detected to be busy.

Any of the one or more above aspects, wherein the DTS frame further comprises an address field to indicate an address of a third STA occupying a channel for which the NAV is set at the second STA.

Any of the one or more above aspects, wherein the address is a receive address and/or a transmit address.

Any of the one or more above aspects, wherein, based on the NAV, the wireless communications devices waits a duration before sending a second RTS.

Any of the one or more above aspects, wherein the BW indication comprises an indication of a primary channel of the communications channel, when the NAV is not set and only one channel of the plurality of directional channels is detected to be busy.

Any of the one or more above aspects, wherein the BW indication comprises an indication of the communications channel, when more than one channel of the two or more directional channels is detected to be busy.

Any of the one or more above aspects, wherein the BW indication comprises an indication of the communications channel, when the NAV is set for a primary channel of the wide channel and at least one non-primary channel is detected as busy.

Any of the one or more above aspects, wherein the BW indication comprises an indication of the communications channel, when the NAV is set for access in the communications channel.

Any of the one or more above aspects, wherein the RF component receives the DTS frame over one of: all of the two or more directional channels; the primary channel of the communications channel; or a channel of the communications channel for which the NAV is set.

A non-transitory information storage media having stored thereon one or more instructions, that when executed by one or more processors, cause a wireless communications device to perform a method, the method comprising: sending a Request to Send (RTS) frame over a communications channel comprising two or more directional channels to a second station (STA); receiving a Denial to Send (DTS) frame over one or more of the two or more directional channels; and reading the DTS frame, wherein the DTS frame comprises at least a Duration field (404), the Duration field indicating: whether a Network Allocation Vector (NAV) is set at the wireless communication device for at least one of two or more directional channels of the communications channel (204), or a duration value specifying a length of time for which the NAV is set, and wherein the DTS frame further comprises a channel bandwidth indication (412), wherein the indication indicates which at least part of the communications channel is detected to be busy.

Any of the one or more above aspects, wherein the DTS frame further comprises an address field to indicate an address of a third STA occupying a channel for which the NAV is set at the second STA.

Any of the one or more above aspects, wherein the address is a receive address and/or a transmit address.

Any of the one or more above aspects, wherein, based on the NAV, the wireless communications devices waits a duration before sending a second RTS.

Any of the one or more above aspects, wherein the BW indication comprises an indication of a primary channel of the communications channel, when the NAV is not set and only one channel of the plurality of directional channels is detected to be busy.

Any of the one or more above aspects, wherein the BW indication comprises an indication of the communications channel, when more than one channel of the two or more directional channels is detected to be busy.

Any of the one or more above aspects, wherein the BW indication comprises an indication of the communications channel, when the NAV is set for a primary channel of the communications channel and at least one non-primary channel is detected as busy.

Any of the one or more above aspects, wherein the BW indication comprises an indication of the communications channel, when the NAV is set for access in the communications channel.

Any of the one or more above aspects, wherein the RF component receives the DTS frame over one of: all of the two or more directional channels; the primary channel of the wide channel; or a channel of the wide channel for which the NAV is set.

A system on a chip (SoC) including any one or more of the above aspects.

One or more means for performing any one or more of the above aspects.

Any one or more of the aspects as substantially described herein.

For purposes of explanation, numerous details are set forth in order to provide a thorough understanding of the present embodiments. It should be appreciated however that the techniques herein may be practiced in a variety of ways beyond the specific details set forth herein.

Furthermore, while the exemplary embodiments illustrated herein show the various components of the system collocated, it is to be appreciated that the various components of the system can be located at distant portions of a distributed network, such as a communications network and/or the Internet, or within a dedicated secure, unsecured and/or encrypted system. Thus, it should be appreciated that the components of the system can be combined into one or more devices, such as an access point or station, or collocated on a particular node/element(s) of a distributed network, such as a telecommunications network. As will be appreciated from the following description, and for reasons of computational efficiency, the components of the system can be arranged at any location within a distributed network without affecting the operation of the system. For example, the various components can be located in a transceiver, an access point, a station, a management device, or some combination thereof. Similarly, one or more functional portions of the system could be distributed between a transceiver, such as an access point(s) or station(s) and an associated computing device.

Furthermore, it should be appreciated that the various links, including communications channel(s), connecting the elements (which may not be not shown) can be wired or wireless links, or any combination thereof, or any other known or later developed element(s) that is capable of supplying and/or communicating data and/or signals to and from the connected elements. The term module as used herein can refer to any known or later developed hardware, software, firmware, or combination thereof that is capable of performing the functionality associated with that element. The terms determine, calculate and compute, and variations thereof, as used herein are used interchangeably and include any type of methodology, process, mathematical operation or technique.

While the above-described flowcharts have been discussed in relation to a particular sequence of events, it should be appreciated that changes to this sequence can occur without materially effecting the operation of the embodiment(s). Additionally, the exact sequence of events need not occur as set forth in the exemplary embodiments, but rather the steps can be performed by one or the other transceiver in the communication system provided both transceivers are aware of the technique being used for initialization. Additionally, the exemplary techniques illustrated herein are not limited to the specifically illustrated embodiments but can also be utilized with the other exemplary embodiments and each described feature is individually and separately claimable.

The term transceiver as used herein can refer to any device that comprises hardware, software, circuitry, firmware, or any combination thereof and is capable of performing any of the methods, techniques and/or algorithms described herein.

Additionally, the systems, methods and protocols can be implemented to improve one or more of a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can benefit from the various communication methods, protocols and techniques according to the disclosure provided herein.

Examples of the processors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 processor with 64-bit architecture, Apple^{®} M7 motion coprocessors, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8350 32nm Vishera, AMD^{®} Kaveri processors, Texas Instruments^{®} Jacinto C6000^{™} automotive infotainment processors, Texas Instruments^{®} OMAP^{™} automotive-grade mobile processors, ARM^{®} Cortex^{™}-M processors, ARM^{®} Cortex-A and ARM926EJ-S^{™} processors, Broadcom^{®} AirForce BCM4704BCM4703 wireless networking processors, the AR7100 Wireless Network Processing Unit, other industry-equivalent processors, and may perform computational functions using any known or future-developed standard, instruction set, libraries, and/or architecture.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with the embodiments is dependent on the speed and/or efficiency requirements of the system, the particular function, and the particular software or hardware systems or microprocessor or microcomputer systems being utilized. The communication systems, methods and protocols illustrated herein can be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed methods may be readily implemented in software and/or firmware that can be stored on a storage medium to improve the performance of: a programmed general-purpose computer with the cooperation of a controller and memory, a special purpose computer, a microprocessor, or the like. In these instances, the systems and methods can be implemented as program embedded on personal computer such as an applet, JAVA.RTM. or CGI script, as a resource residing on a server or computer workstation, as a routine embedded in a dedicated communication system or system component, or the like. The system can also be implemented by physically incorporating the system and/or method into a software and/or hardware system, such as the hardware and software systems of a communications transceiver.

It is therefore apparent that there has at least been provided systems and methods for enhanced communications. While the embodiments have been described in conjunction with a number of embodiments, it is evident that many alternatives, modifications and variations would be or are apparent to those of ordinary skill in the applicable arts.

## Claims

1. A wireless communications device comprising:
a radio frequency, RF, component to receive a Request to Send, RTS, (216) frame over a communications channel (204);
a memory (816) storing instructions, and processing circuitry (820) coupled to the memory, the processing circuitry to implement the instructions to:
process the RTS frame received over the communications channel;
generate a Denial to Send, DTS, (304) frame, wherein the DTS frame comprises at least a Duration field (404), the Duration field indicating: whether a Network Allocation Vector (NAV) is set at the wireless communication device for at least one of two or more directional channels of the communications channel (204), or a duration value specifying a length of time for which the NAV is set;
the RF component further to transmit the Denial to Send, DTS, frame over one or more of the two or more directional channels; and
wherein the DTS frame further comprises a channel bandwidth indication (412), wherein the indication indicates which at least part of the communications channel is detected to be busy.

2. The communications device of claim 1, wherein the device operates in the 20 GHz to 300 GHZ range in a DMG, Directional Multi Gigabit, network, and the RF component further comprises: a receiver (868) that receives the RTS frame and a transmitter (864) that transmits the DTS frame.

3. The wireless communications device of claim 1, wherein the processing circuitry (820) is configured to detect whether one or more of the directional channels is busy.

4. The wireless communications device of claim 3, wherein when the NAV is not set and only one channel of the plurality of directional channels is detected to be busy, the BW indication (412) comprises an indication of a primary channel of the communications channel.

5. The wireless communications device of claim 3, wherein when more than one channel of the two or more directional channels is detected to be busy, the BW indication (412) comprises an indication of the communications channel.

6. The wireless communications device of claim 3, wherein when the NAV is set for a primary channel of the communications channel and at least one non-primary channel is detected as busy, the BW indication (412) comprises an indication of the communications channel.

7. The wireless communications device of claim 3, wherein when the NAV is set for access in the communications channel, the BW indication (412) comprises an indication of the communications channel.

8. The wireless communications device of claim 3, wherein the RF component transmits the DTS frame over one of:
all of the two or more directional channels;
the primary channel of the communications channel; or
a channel of the communications channel for which the NAV is set.

9. A wireless communications method, in a communications device, comprising:
receiving via a radio frequency, RF, component a Request to Send, RTS, (216) frame over a communications channel (204);
processing the Request to Send, RTS, frame received over the communications channel;
generating a Denial to Send, DTS, frame (304), wherein the DTS frame comprises at least a Duration field (404), the Duration field indicating: whether a Network Allocation Vector (NAV) is set at the wireless communication device for at least one of two or more directional channels of the communications channel (204), or a duration value specifying a length of time for which the NAV is set;
transmitting via the RF component the Denial to Send, DTS, frame over one or more of the two or more directional channels; and
wherein the DTS frame further comprises a channel bandwidth indication (412), wherein the indication indicates which at least part of the communications channel is detected to be busy.

10. The communications method of claim 9, wherein the device operates in the 20 GHz to 300 GHZ range in a DMG, Directional Multi Gigabit, network, and the RF component further comprises: a receiver (868) that receives the RTS frame and a transmitter (864) that transmits the DTS frame.

11. The wireless communications method of claim 9, further comprising detecting whether one or more of the directional channels is busy, and wherein when the NAV is not set and only one channel of the plurality of directional channels is detected to be busy, the BW indication (412) comprises an indication of a primary channel of the communications channel, or wherein when more than one channel of the two or more directional channels is detected to be busy, the BW indication comprises an indication of the communications channel, or wherein when the NAV is set for a primary channel of the wide channel and at least one non-primary channel is detected as busy, the BW indication comprises an indication of the communications channel, or wherein when the NAV is set for access in the communications channel, the BW indication comprises an indication of the communications channel, or further comprising transmitting the DTS frame over one of:
all of the two or more directional channels;
the primary channel of the communications channel; or
a channel of the communications channel for which the NAV is set.

12. A non-transitory information storage media having stored thereon one or more instructions, that when executed by one or more processors, cause a wireless communications device to perform a method according to any of claims 9 to 11.

13. A wireless communications device comprising:
a radio frequency, RF, component to:
send a Request to Send, RTS, frame over a communications channel comprising two or more directional channels to a second station, STA;
receive a Denial to Send, DTS, frame over one or more of the two or more directional channels, wherein the DTS frame comprises at least a Duration field (404), the Duration field indicating: whether a Network Allocation Vector, NAV, is set at the wireless communication device for at least one of two or more directional channels of the communications channel (204), or a duration value specifying a length of time for which the NAV is set; and
a controller in communication with the RF component, the controller to: read the DTS frame, wherein the DTS frame further comprises a channel bandwidth indication (412), wherein the indication indicates which at least part of the communications channel is detected to be busy.

14. A method comprising:
sending, by a radio frequency, RF, component, of a wireless communications device, a Request to Send, RTS, frame over a communications channel comprising two or more directional channels to a second station, STA;
receiving, by the radio frequency, RF, component, of a wireless communications device, a Denial to Send, DTS, frame over one or more of the two or more directional channels; and
reading, by a controller of the wireless communications device, the DTS frame, wherein the DTS frame comprises at least a Duration field (404), the Duration field indicating: whether a Network Allocation Vector, NAV, is set at the wireless communication device for at least one of two or more directional channels of the communications channel (204), or a duration value specifying a length of time for which the NAV is set, and wherein the DTS frame further comprises a channel bandwidth indication (412), wherein the indication indicates which at least part of the communications channel is detected to be busy.

15. A non-transitory information storage media having stored thereon one or more instructions, that when executed by one or more processors, cause a wireless communications device to perform a method according to claim 14.

## Patentansprüche

1. Drahtlose Kommunikationsvorrichtung umfassend:
eine Funkfrequenz-, RF-, Komponente zum Empfangen eines Request-to-Send-, RTS-, (216) Frames über einen Kommunikationskanal (204);
einen Speicher (816), der Anweisungen speichert, und eine Verarbeitungsschaltungsanordnung (820), die mit dem Speicher gekoppelt ist, wobei die Verarbeitungsschaltungsanordnung die Anweisungen implementieren soll, um:
den über den Kommunikationskanal empfangenen RTS-Frame zu verarbeiten;
einen Denial-to-Send-, DTS-, (304) Frame zu erzeugen, wobei der DTS-Frame mindestens ein Dauerfeld (404) umfasst, wobei das Dauerfeld angibt: ob ein Netzwerkzuweisungsvektor (NAV) an der drahtlosen Kommunikationsvorrichtung für mindestens einen von zwei oder mehr Richtungskanälen des Kommunikationskanals (204) eingestellt ist, oder einen Dauerwert, der eine Zeitspanne vorgibt, für die der NAV eingestellt ist;
die RF-Komponente ferner den Denial-to-Send-, DTS-, Frame über einen oder mehrere der zwei oder mehr Richtungskanäle übertragen soll; und
wobei der DTS-Frame ferner eine Kanalbandbreiten-Angabe (412) umfasst, wobei die Angabe angibt, welcher mindestens Teil des Kommunikationskanals als belegt erkannt wird.

2. Kommunikationsvorrichtung nach Anspruch 1, wobei die Vorrichtung im Bereich von 20 GHz bis 300 GHZ in einem DMG-, Directional Multi Gigabit, -Netzwerk arbeitet und die RF-Komponente ferner umfasst: einen Empfänger (868), der den RTS-Frame empfängt, und einen Sender (864), der den DTS-Frame überträgt.

3. Drahtlose Kommunikationsvorrichtung nach Anspruch 1, wobei die Verarbeitungsschaltungsanordnung (820) dazu ausgelegt ist, zu erkennen, ob einer oder mehrere der Richtungskanäle belegt sind.

4. Drahtlose Kommunikationsvorrichtung nach Anspruch 3, wobei die BW-Angabe (412) eine Angabe eines primären Kanals des Kommunikationskanals umfasst, wenn der NAV nicht eingestellt ist und nur ein Kanal der Mehrzahl von Richtungskanälen als belegt erkannt wird.

5. Drahtlose Kommunikationsvorrichtung nach Anspruch 3, wobei die BW-Angabe (412) eine Angabe des Kommunikationskanals umfasst, wenn mehr als ein Kanal der zwei oder mehr Richtungskanäle als belegt erkannt wird.

6. Drahtlose Kommunikationsvorrichtung nach Anspruch 3, wobei die BW-Angabe (412) eine Angabe des Kommunikationskanals umfasst, wenn der NAV für einen primären Kanal des Kommunikationskanals eingestellt ist und mindestens ein nicht-primärer Kanal als belegt erkannt wird.

7. Drahtlose Kommunikationsvorrichtung nach Anspruch 3, wobei die BW-Angabe (412) eine Angabe des Kommunikationskanals umfasst, wenn der NAV für den Zugriff im Kommunikationskanal eingestellt ist.

8. Drahtlose Kommunikationsvorrichtung nach Anspruch 3, wobei die RF-Komponente den DTS-Frame über:
alle der zwei oder mehr Richtungskanäle; oder
den primären Kanal des Kommunikationskanals; oder
einen Kanal des Kommunikationskanals, für den der NAV eingestellt ist, überträgt.

9. Drahtloses Kommunikationsverfahren, in einer Kommunikationsvorrichtung, umfassend:
Empfangen eines Request-to-Send-, RTS-, (216) Frames über einen Kommunikationskanal (204) über eine Funkfrequenz-, RF-, Komponente;
Verarbeiten des über den Kommunikationskanal empfangenen Request-to-Send-, RTS-, Frame;
Erzeugen eines Denial-to-Send-, DTS-, Frames (304), wobei der DTS-Frame mindestens ein Dauerfeld (404) umfasst, wobei das Dauerfeld angibt: ob ein Netzwerkzuweisungsvektor (NAV) an der drahtlosen Kommunikationsvorrichtung für mindestens einen von zwei oder mehr Richtungskanälen des Kommunikationskanals (204) eingestellt ist, oder einen Dauerwert, der eine Zeitdauer vorgibt, für die der NAV eingestellt ist;
Übertragen des Denial-to-Send-, DTS-, Frames über einen oder mehrere der zwei oder mehr Richtungskanäle über die RF-Komponente; und
wobei der DTS-Frame ferner eine Kanalbandbreiten-Angabe (412) umfasst, wobei die Angabe angibt, welcher mindestens Teil des Kommunikationskanals als belegt erkannt wird.

10. Kommunikationsverfahren nach Anspruch 9, wobei die Vorrichtung im Bereich von 20 GHz bis 300 GHZ in einem DMG-, Directional Multi Gigabit, -Netzwerk arbeitet und die RF-Komponente ferner umfasst: einen Empfänger (868), der den RTS-Frame empfängt, und einen Sender (864), der den DTS-Frame überträgt.

11. Drahtloses Kommunikationsverfahren nach Anspruch 9, das ferner das Erkennen umfasst, ob einer oder mehrere der Richtungskanäle belegt sind, und wobei, wenn der NAV nicht eingestellt ist und nur ein Kanal der Mehrzahl von Richtungskanälen als belegt erkannt wird, die BW-Angabe (412) eine Angabe eines primären Kanals des Kommunikationskanals umfasst, oder wobei, wenn mehr als ein Kanal der zwei oder mehr Richtungskanäle als belegt erkannt wird, die BW-Angabe eine Angabe des Kommunikationskanals umfasst, oder wobei, wenn der NAV für einen primären Kanal des breiten Kanals eingestellt ist und mindestens ein nicht primärer Kanal als belegt erkannt wird, die BW-Angabe eine Angabe des Kommunikationskanals umfasst, oder wobei, wenn der NAV für den Zugriff im Kommunikationskanal eingestellt ist, die BW-Angabe eine Angabe des Kommunikationskanals umfasst, oder ferner das Übertragen des DTS-Frames über:
alle der zwei oder mehr Richtungskanäle; oder
den primären Kanal des Kommunikationskanals; oder
einen Kanal des Kommunikationskanals, für den der NAV eingestellt ist, umfasst.

12. Nichtflüchtiges Informationsspeichermedium, auf dem eine oder mehrere Anweisungen gespeichert sind, die, wenn sie von einem oder mehreren Prozessoren ausgeführt werden, eine drahtlose Kommunikationsvorrichtung veranlassen, ein Verfahren nach einem der Ansprüche 9 bis 11 durchzuführen.

13. Drahtlose Kommunikationsvorrichtung umfassend:
eine Funkfrequenz-, RF-, Komponente, um:
einen Request-to-Send-, RTS-, Frame über einen Kommunikationskanal, der zwei oder mehr Richtungskanäle umfasst, an eine zweite Station, STA, zu senden;
einen Denial-to-Send-, DTS-, Frame über einen oder mehrere der zwei oder mehr Richtungskanäle zu empfangen,
wobei der DTS-Frame mindestens ein Dauerfeld (404) umfasst, wobei das Dauerfeld angibt: ob ein Netzwerkzuweisungsvektor, NAV, an der drahtlosen Kommunikationsvorrichtung für mindestens einen der zwei oder mehr Richtungskanäle des Kommunikationskanals (204) eingestellt ist, oder einen Dauerwert, der eine Zeitspanne vorgibt, für die der NAV eingestellt ist; und
eine Steuerung in Kommunikation mit der RF-Komponente, wobei die Steuerung: den DTS-Frame liest, wobei der DTS-Frame ferner eine Kanalbandbreiten-Angabe (412) umfasst, wobei die Angabe angibt, welcher mindestens Teil des Kommunikationskanals als belegt erkannt wird.

14. Verfahren, umfassend:
Senden eines Request-to-Send-, RTS-, Frames über einen Kommunikationskanal, der zwei oder mehr Richtungskanäle umfasst, zu einer zweiten Station, STA, durch eine Funkfrequenz-, RF-, Komponente einer drahtlosen Kommunikationsvorrichtung;
Empfangen eines Denial-to-Send-, DTS-, Frames über einen oder mehrere der zwei oder mehr Richtungskanäle durch die Funkfrequenz-, RF-, Komponente einer drahtlosen Kommunikationsvorrichtung; und
Lesen des DTS-Frames durch eine Steuerung der drahtlosen Kommunikationsvorrichtung, wobei der DTS-Frame mindestens ein Dauerfeld (404) umfasst, wobei das Dauerfeld angibt: ob ein Netzwerkzuweisungsvektor, NAV,
an der drahtlosen Kommunikationsvorrichtung für mindestens einen von zwei oder mehr Richtungskanälen des Kommunikationskanals (204) eingestellt ist, oder einen Dauer-Wert, der eine Zeitdauer vorgibt, für die der NAV eingestellt ist, und wobei der DTS-Frame ferner eine Kanalbandbreiten-Angabe (412) umfasst, wobei die Angabe angibt, welcher mindestens Teil des Kommunikationskanals als belegt erkannt ist.

15. Nichtflüchtiges Informationsspeichermedium, auf dem eine oder mehrere Anweisungen gespeichert sind, die, wenn sie von einem oder mehreren Prozessoren ausgeführt werden, eine drahtlose Kommunikationsvorrichtung veranlassen, ein Verfahren nach Anspruch 14 durchzuführen.

## Revendications

1. Dispositif de communication sans fil, comprenant :
un composant radiofréquence, RF, destiné à recevoir une trame de demande d'émettre, RTS, (216) par le biais d'un canal de communication (204) ;
une mémoire (816) stockant des instructions, et une circuiterie de traitement (820) couplée à la mémoire, la circuiterie de traitement étant destinée à mettre en œuvre les instructions pour :
traiter la trame de RTS reçue par le biais du canal de communication ;
générer une trame de refus d'émettre, DTS, (304), dans lequel la trame de DTS comprend au moins un champ de durée (404), le champ de durée indiquant : le fait qu'un vecteur d'attribution de réseau (NAV) est réglé ou non, dans le dispositif de communication sans fil, pour au moins un parmi deux, ou plus, canaux directionnels du canal de communication (204), ou une valeur de durée spécifiant une longueur temporelle pour laquelle le NAV est réglé ;
le composant RF étant en outre destiné à transmettre la trame de refus d'émettre, DTS, par le biais d'un ou de plusieurs parmi les deux, ou plus, canaux directionnels ; et
dans lequel la trame de DTS comprend en outre une indication de largeur de bande de canal (412), dans lequel l'indication indique au moins une partie du canal de communication dont l'état occupé est détecté.

2. Dispositif de communication selon la revendication 1, dans lequel le dispositif fonctionne dans la plage de 20 GHz à 300 GHz dans un réseau DMG, Directional Multi Gigabit, et le composant RF comprend en outre : un récepteur (868) qui reçoit la trame de RTS et un transmetteur (864) qui transmet la trame de DTS.

3. Dispositif de communication sans fil selon la revendication 1, dans lequel la circuiterie de traitement (820) est configurée pour détecter le fait qu'un ou plusieurs parmi les canaux directionnels sont occupés ou non.

4. Dispositif de communication sans fil selon la revendication 3, dans lequel, lorsque le NAV n'est pas réglé et il y a seulement un canal, parmi la pluralité de canaux directionnels, dont l'état occupé est détecté, l'indication de BW (412) comprend une indication d'un canal primaire du canal de communication.

5. Dispositif de communication sans fil selon la revendication 3, dans lequel, lorsqu'il y a plus d'un canal, parmi les deux, ou plus, canaux directionnels, dont l'état occupé est détecté, l'indication de BW (412) comprend une indication du canal de communication.

6. Dispositif de communication sans fil selon la revendication 3, dans lequel, lorsque le NAV est réglé pour un canal primaire du canal de communication et il y a au moins canal non primaire dont l'état occupé est détecté, l'indication de BW (412) comprend une indication du canal de communication.

7. Dispositif de communication sans fil selon la revendication 3, dans lequel, lorsque le NAV est réglé pour l'accès dans le canal de communication, l'indication de BW (412) comprend une indication du canal de communication.

8. Dispositif de communication sans fil selon la revendication 3, dans lequel le composant RF transmet la trame de DTS par le biais d'un parmi :
la totalité des deux, ou plus, canaux directionnels ;
le canal primaire du canal de communication ; ou
un canal du canal de communication pour lequel le NAV est réglé.

9. Procédé de communication sans fil, dans un dispositif de communication, comprenant :
la réception, par l'intermédiaire d'un composant radiofréquence, RF, d'une trame de demande d'émettre, RTS, (216), par le biais d'un canal de communication (204) ;
le traitement de la trame de demande d'émettre, RTS, reçue par le biais du canal de communication ;
la génération d'une trame de refus d'émettre, DTS, (304), dans lequel la trame de DTS comprend au moins un champ de durée (404), le champ de durée indiquant : le fait qu'un vecteur d'attribution de réseau (NAV) est réglé ou non, dans le dispositif de communication sans fil, pour au moins un parmi deux, ou plus, canaux directionnels du canal de communication (204), ou une valeur de durée spécifiant une longueur temporelle pour laquelle le NAV est réglé ;
la transmission, par l'intermédiaire du composant RF, de la trame de refus d'émettre, DTS, par le biais d'un ou de plusieurs parmi les deux, ou plus, canaux directionnels ; et
dans lequel la trame de DTS comprend en outre une indication de largeur de bande de canal (412), dans lequel l'indication indique au moins une partie du canal de communication dont l'état occupé est détecté.

10. Procédé de communication selon la revendication 9, dans lequel le dispositif fonctionne dans la plage de 20 GHz à 300 GHz dans un réseau DMG, Directional Multi Gigabit, et le composant RF comprend en outre : un récepteur (868) qui reçoit la trame de RTS et un transmetteur (864) qui transmet la trame de DTS.

11. Procédé de communication sans fil selon la revendication 9, comprenant en outre la détection du fait qu'un ou plusieurs parmi les canaux directionnels est occupé ou non, et dans lequel, lorsque le NAV n'est pas réglé et il y a seulement un canal, parmi la pluralité de canaux directionnels, dont l'état occupé est détecté, l'indication de BW (412) comprend une indication d'un canal primaire du canal de communication, ou dans lequel, lorsqu'il y a plus d'un canal, parmi les deux, ou plus, canaux directionnels, dont l'état occupé est détecté, l'indication de BW comprend une indication du canal de communication, ou dans lequel, lorsque le NAV est réglé pour un canal primaire du canal large et il y a au moins canal non primaire dont l'état occupé est détecté, l'indication de BW comprend une indication du canal de communication, ou dans lequel, lorsque le NAV est réglé pour l'accès dans le canal de communication, l'indication de BW comprend une indication du canal de communication, ou comprenant en outre la transmission de la trame de DTS par le biais d'un parmi :
la totalité des deux, ou plus, canaux directionnels ;
le canal primaire du canal de communication ; ou
un canal du canal de communication pour lequel le NAV est réglé.

12. Support non transitoire de stockage d'informations ayant, stockées sur celui-ci, une ou plusieurs instructions, qui, lorsqu'elles sont exécutées par un ou plusieurs processeurs, font en sorte qu'un dispositif de communication sans fil réalise un procédé selon l'une quelconque des revendications 9 à 11.

13. Dispositif de communication sans fil, comprenant :
un composant radiofréquence, RF, pour :
envoyer une trame de demande d'émettre, RTS, par le biais d'un canal de communication comprenant deux, ou plus, canaux directionnels, à une seconde station, STA ;
recevoir une trame de refus d'émettre, DTS, par le biais d'un ou de plusieurs parmi les deux, ou plus, canaux directionnels, dans lequel la trame de DTS comprend au moins un champ de durée (404), le champ de durée indiquant : le fait qu'un vecteur d'attribution de réseau, NAV, est réglé ou non, dans le dispositif de communication sans fil, pour au moins un parmi deux, ou plus, canaux directionnels du canal de communication (204), ou une valeur de durée spécifiant une longueur temporelle pour laquelle le NAV est réglé ; et
une unité de commande en communication avec le composant RF, l'unité de commande étant destinée à : lire la trame de DTS, dans lequel la trame de DTS comprend en outre une indication de largeur de bande de canal (412), dans lequel l'indication indique au moins une partie du canal de communication dont l'état occupé est détecté.

14. Procédé, comprenant :
l'envoi, par un composant radiofréquence, RF, d'un dispositif de communication sans fil, d'une trame de demande d'émettre, RTS, par le biais d'un canal de communication comprenant deux, ou plus, canaux directionnels, à une seconde station, STA ;
la réception, par le composant radiofréquence, RF, d'un dispositif de communication sans fil, d'une trame de refus d'émettre, DTS, par le biais d'un ou de plusieurs parmi les deux, ou plus, canaux directionnels ; et
la lecture, par une unité de commande du dispositif de communication sans fil, de la trame de DTS, dans lequel la trame de DTS comprend au moins un champ de durée (404), le champ de durée indiquant : le fait qu'un vecteur d'attribution de réseau, NAV, est réglé ou non, dans le dispositif de communication sans fil, pour au moins un parmi deux, ou plus, canaux directionnels du canal de communication (204), ou une valeur de durée spécifiant une longueur temporelle pour laquelle le NAV est réglé, et dans lequel la trame de DTS comprend en outre une indication de largeur de bande de canal (412), dans lequel l'indication indique au moins une partie du canal de communication dont l'état occupé est détecté.

15. Support non transitoire de stockage d'informations ayant, stockées sur celui-ci, une ou plusieurs instructions, qui, lorsqu'elles sont exécutées par un ou plusieurs processeurs, font en sorte qu'un dispositif de communication sans fil réalise un procédé selon la revendication 14.
